# EUROPÄISCHE PATENTSCHRIFT

(11) **EP 2 252 819 B1**
(45) Veröffentlichungstag und Bekanntmachung des Hinweises auf die Patenterteilung: **26.09.2012**
(21) Anmeldenummer: 09710343.6
(22) Anmeldetag: 13.02.2009
(51) Int. Cl.: F16K 27/02, F16K 31/122

(54) **VORRICHTUNG ZUR VERBINDUNG EINES VENTILGEHÄUSES MIT EINEM STELLANTRIEB BEI EINEM ALS HUBVENTIL FUNGIERENDEN PROZESSVENTIL**
DEVICE FOR CONNECTING A VALVE HOUSING TO AN ACTUATOR IN A PROCESS VALVE ACTING AS A LIFT VALVE
DISPOSITIF POUR RELIER UN BOÎTIER DE SOUPAPE À UN MÉCANISME DE COMMANDE POUR SOUPAPE DE TRAITEMENT FONCTIONNANT COMME SOUPAPE DE LEVAGE

(30) Priorität: 16.02.2008 DE 102008009606; 22.04.2008 DE 102008020098
(43) Veröffentlichungstag der Anmeldung: 24.11.2010
(73) Patentinhaber: GEA Tuchenhagen GmbH, 21514 Büchen (DE)
(72) Erfinder: BURMESTER, Jens, 23883 Grambek (DE)
(74) Vertreter: Hauck Patent- und Rechtsanwälte
(86) Internationale Anmeldenummer: PCT/EP2009/001020
(87) Internationale Veröffentlichungsnummer: WO 2009/100921

(56) Entgegenhaltungen:
- EP-A- 0 174 384
- EP-A- 0 646 741
- WO-A-2007/128360
- AT-B- 304 972
- DE-A1- 3 006 409
- DE-A1- 3 106 578
- DE-A1- 3 246 446
- DE-U1- 20 006 594
- US-A- 3 219 311

## Beschreibung

### TECHNISCHES GEBIET

Die Erfindung betrifft ein als Hubventil fungierendes Prozessventil, mit einem aus wenigstens einem Ventilgehäuseteil bestehenden Ventilgehäuse, mit wenigstens einem ersten und einem zweiten Anschlussstutzen, die an den Ventilgehäuseteil angeschlossen sind und eine Verbindung zu dessen Innenraum herstellen, mit einer im Ventilgehäuse zwischen den Anschlussstutzen angeordneten Verbindungsöffnung, in oder an der wenigstens eine Sitzfläche ausgebildet ist, mit wenigstens einem translatorisch verschieblichen Verschlussteil, der(die) mit der zugeordneten Sitzfläche zusammenwirkt(zusammenwirken) und die Verbindungsöffnung steuert(steuem), mit einer an jedem Verschlussteil befestigten Betätigungsstange, die durch eine der Verbindungsöffnung gegenüberliegende Gehäuseöffnung des Ventilgehäuses aus diesem dichtend herausgeführt und mit einem Antriebskolben eines Stellantriebs verbunden ist(sind), mit einem das Ventilgehäuse mit dem Stellantrieb verbindenden Latemengehäuse, das wenigstens an seinem ventilgehäuseseitigen Ende Mittel zur Verbindung mit dem Ventilgehäuse aufweist.

### STAND DER TECHNIK

Das Hubventil der einleitend gekennzeichneten Gattung besitzt die notwendigen Merkmale eines Absperrventils, bei dem wenigstens eine Komponente der translatorischen Öffnungs- und Schließbewegung seines als Sitzteller ausgebildeten Verschlussteils (Einsitzventil) bzw. seiner als Sitzteller ausgebildeten Verschlussteile (Doppelsitzventil) senkrecht zu einer zugeordneten Sitzfläche gerichtet ist bzw. sind. Das Hubventil kann aber auch im Rahmen der vorstehenden Ausführungsformen als Schieberventil ausgeführt sein, bei dem das als Schieberkolben ausgebildete Verschlussteil bzw. die als Schieberkolben ausgebildeten Verschlussteile bei der translatorischen Öffnungs- und Schließbewegung an einer zugeordneten zylindrischen Sitzfläche entlanggleitet bzw. entlanggleiten. Beim Doppelsitzventil ist auch eine Kombination von Sitzteiier und Schieberkolben bekannt.

Eine im Sitzteller angeordnete Verschlussteildichtung wirkt axial oder axial/radial mit der zugeordneten Sitzfläche zusammen (Dichtung im sog. Druckeingriff, während eine im Schieberkolben angeordnete Verschlussteildichtung radial mit der zugeordneten zylindrischen Sitzfläche zusammenwirkt (Dichtung im sog. Gleiteingriff). Die translatorische Öffnungs- und Schließbewegung des jeweiligen Verschlussteils wird über einen druckmittelbeaufschlagten Kolbenantrieb, vorzugsweise einen pneumatisch beaufschlagten, generiert, wobei die Rückstellbewegung eines Antriebskolbens in der Regel durch eine Feder, vorzugsweise eine Schraubenfeder, erfolgt. Der Kolbenanirieb kann, bezogen auf das Verschlussteil und die zugeordnete Sitzfläche, federschließend oder federöffnend arbeiten. Zur Reduzierung der Öffnungskräfte des Absperrventils kann die Betätigungsstange des Verschlussteils im Bereich ihrer Durchdringung durch das Ventilgehäuse in Form eines sog. Druckausgleichskolbens ausgebildet sein, so dass die am Verschlusstell in Hubrichtung wirkenden Druckkräfte aus dem im Ventilgehäuse anstehenden Fluid (z.B. Produkt) an der projizierten Stirnfläche des Druckausgleichskolbens eine teilweise bis vollständige Kompensation erfahren.

Prozessventile der vorstehend beschriebenen Art gibt es in vielfältigen Ausführungen, wobei zwecks sicherer Trennung eines im Ventilgehäuse befindlichen Fluids von dem den Antriebskolben im Stellantrieb beaufschlagenden Druckmittel zwischen dem Ventilgehäuse und dem Stellantrieb ein sog. Latemengehäuse angeordnet ist. Die Öffnungsbewegung der Prozessventile erfolgt, bezogen auf die senkrechte Normallage des Ventils, entweder nach oben oder nach unten, so dass man von einem nach oben oder nach unten öffnenden Ventil spricht. Da in der Regel nach unten eine möglichst geringe Bauhöhe erwünscht ist, wird der Stellantrieb im Regelfall oberhalb des Ventilgehäuses angeordnet.

Ein entscheidendes Auswahlkriterium für Prozessventile der in Rede stehenden Art ist nicht nur ihre Bauhöhe nach unten, sondern auch jene nach oben. Letztere wird wesentlich von der Ausbildung des Latemengehäuses und des Stellantriebs bestimmt, wobei es zur Reduzierung der Bauhöhe bereits bekannt ist, die Federn des Stellantriebes eines Doppelsitzventils vollständig in den Bauraum des Latemengehäuses zu integrieren (Stand der Technik z.B. gemäß EP 0 646 741 B1). Bei einem anderen bekannten Prozessventil, welches ein einziges Verschlussteil aufweist, bleibt das Latemengehäuse vollständig frei von diesbezüglich bauhöhesparenden Einbauten (DE 20006 594 U1). Vergleichbare Verhältnisse sind bei einem Doppelsitzventil gemäß DE 38 35 944 A1 bekannt.

Bei den vorstehend erwähnten Doppelsitzventilen werden die Betätigungsstangen der Schließglieder, insbesondere dann, wenn letztere als Schieberkolben ausgeführt sind, in der Regel in Form der vorstehend erwähnten Druckausgleichskolben ausgebildet. Um eine hinreichende Kompensation der Kräfte auf das jeweilige Schließglied durch entsprechende Gegenkräfte auf den zugeordneten Druckausgleichskolben sicherzustellen, werden diese Druckausgleichskolben querschnittsmäßig meist bis annähernd auf den wirksamen projizierten Querschnitt des zugeordneten Schließgliedes erweitert. Die dadurch bedingten großen Durchtrittsquerschnitte durch das Ventilgehäuse erschweren zwar einerseits die Abdichtung dieser Druckausgleichskolben, andererseits bietet dafür aber der Druckausgleichskolben in seinem Innern Bauraum für eine bauhöhensparende Aufnahme der Federn des Ventilantriebs.

Auch die Art der Verbindung zwischen Ventilgehäuse und Stellantrieb über das Laternengehäuse nimmt Einfluss auf die Bauhöhe des jeweiligen Prozessventils, wobei dieser Einfluss eher gering ist. Entscheidender ist in diesem Zusammenhang der Einfluss dieser Verbindung auf den Montage- und Demontageaufwand sowie auf die Kosten, um diese Verbindung zu realisieren. Es werden seit Jahrzehnten im Wesentlichen die nachfolgend kurz umrissenen drei Arten einer diesbezüglichen Verbindung ausgeführt.

Zum Einen handelt es sich um eine Verbindung mittels Flansche, die miteinander verschraubt werden. Die Druckschriften EP 0 646 741 B1 und EP 0 174 384 B1 zeigen jeweils eine diesbezügliche Verbindung zwischen Ventil- und Latemengehäuse bei einem Doppelsitzventll. Diese Verbindung ist zeitraubend bei der Montage oder Demontage und eine Verdrehung zwischen Ventilgehäuse und Antrieb ist nur im Rahmen der Umfangsteilung der Verbindungsschrauben möglich.

In der Mehrzahl aller Prozessventile der in Rede stehenden Art wird heute zum Anderen die sog. Klemmflanschverbindung bevorzugt, die beispielsweise inder DE 200 06 594 U1 (Prozessventil mit einem einzigen Schließglied) oder in der DE 38 35 944 A1 oder der EP 0 834 689 A1 (jeweils ein Doppelsitzventil) offenbart ist. Hierbei weisen die miteinander zu verbindenden Gehäuseteile jeweils einen sog. Klemmflansch auf, der an seiner außenseitigen Flanke, radial nach außen, kegelförmig geneigt ist. Das jeweilige Paar Klemmflansche, das sich, radial nach außen, symmetrisch verjüngt, wird durch einen geteilten, nahezu 360 Grad umschlingenden, zu den geneigten Flanken komplementären Spannring zusammen gehalten, wobei die beiden Spannringhälften entweder über ein Gelenk einerseits und eine Schraubenverbindung andererseits oder über zwei Schraubenverbindungen miteinander verbunden und zusammengehalten werden. Eine diesbezügliche Verbindung ist montage- und demontagefreundlich und eine Positionierung des Antriebs gegenüber dem Ventilgehäuse ist in jeder beliebigen Lage möglich. Die Kosten für eine diesbezügliche Verbindung sind allerdings höher als bei einer verschraubten Flanschverbindung.

Schließlich ist bekannt, die Verbindung zwischen Ventil- und Antriebsgehäuse über eine Schraubverbindung (z.B. sog. Rohrverschraubung nach **DIN 11851** oder **DIN 11864**) vorzunehmen (WO 2007/128360 A1). Dabei trägt in der Regel das Latemengehäuse die Nutmutter und das Bolzengewinde ist am Ventilgehäuse angeformt. Diese Verbindung wird bevorzugt bei sterilen verfahrenstechnischen Prozessen angewendet, weil die Nutmutter nach außen weniger Angriffsflächen für eine Verschmutzung bietet als eine verschraubte Flansch- oder Klemmflanschverbindung. Die Kosten sind im Vergleich zu den beiden vorg. Verbindungsarten am höchsten; Nachteile der vorg. Art sind demgegenüber nicht gegeben.

Die Druckschrift DE 90 13 788 U1 beschreibt ein Anschlussstück für ein Zusatzgerät für die Wärme- und Wasserversorgung, insbesondere für einen Wasserzähler, einen Wärmezähler oder einen Fifteraufsatz, mit einem Absperrventil, das in einem Gehäuse zwischen einer Durchgangsstellung und einer Absperrstellung drehbar gelagert ist, und mit einem mit dem Gehäuse lösbar verbindbaren Aufsatz für das Zusatzgerät. Hierbei wird der Aufsatz mittels eines Bajonettverschlusses, bei dem ein Bolzen in einer L-förmiger Nut geführt ist, mit dem Gehäuse verbunden. Der Aufsatz ist mit dem Absperrventil derart gekoppelt (dies bedeutet konkret eine Mitnahmeverbindung in Umfangsrichtung, nicht eine Spannverbindung in axialer Richtung), dass bei der Montage des Aufsatzes am Gehäuse das Absperrventil geöffnet und bei der Demontage geschlossen wird. Für die zwangsweise kraftschlüssige Verbindung des Aufsatzes und des Absperrventils wird es bevorzugt, wenn mit dem Aufsatz ein Kuppelglied (Bohrung) verbunden ist, das lösbar mit einem Gegenkuppelglied (Bolzen) des Ventils verbindbar ist. Beim Aufsetzen des Aufsatzes wird somit das Kuppelglied mit dem Gegenkuppelglied (Bolzen greift in Bohrung ein) kraftschlüssig verbunden und die Bewegung des Aufsatzes (in Umfangsrichtung) wird dadurch auf das Ventil übertragen, welches entsprechend geöffnet bzw. geschlossen wird.

In der WO 2007/128 360 A1 sind Gehäuseaggregationen für Überwachungs-, Steuerungs - und Regelungssysteme für ein Prozessventil beschrieben. Die jeweilige Gehäuseaggregation besteht aus einer Aneinanderreihung einzelner Gehäuseaufsätze, die über einen bajonettverschlussähnlichen Verbindungsmechanismus miteinander verbunden sind.

Es ist Aufgabe der vorliegenden Erfindung, bei einem als Hubventil fungierenden Prozessventil der eingangs beschriebenen Art eine Verbindung des Ventilgehäuses mit dem Lateruen gehäuse dereiteustellen die eine geringere Bauhöhe und niedrigere Kosten als alle bekannten Verbindungen dieser Art aufweist und die darüber hinaus bei größtmöglicher Öffnungssicherheit sehr einfach in ihrem konstruktiven Aufbau ist.

### ZUSAMMENFASSUNG DER ERFINDUNG

Diese Aufgabe wird durch Merkmale im Anspruch 1 gelöst. Vorteilhafte Ausführungsformen des Prozessventilsgemäß der Erfindung sind Gegenstand der Unteransprüche.

Der erfinderische Grundgedanke besteht darin, die in Rede stehende Verbindung an allen als Hubventil fungierenden Prozessventilen der vorstehend beschriebenen Art, d.h. Einsitz- sowie wie Doppelsitzventile in einer Ausgestaltung als Absperr-, Tankboden-, Umschalt- oder ein anderes Mehrwegeventil, mittels einer bauhöhensparenden Bajonettverbindung Wieim kewnzeichnenden Teil von Anspruch 1 definiert zu realisieren. Durch den Bajonettmechanismus entfallen an dieser Verbindungsstelle die sonst üblichen aufwendigen Schließmechanismen, wodurch sich die Verbindung im Sinne der Aufgabenstellung konstruktiv deutlich vereinfacht.

Erfindungsgemäß ist vorgesehen dass das bevorzugt rohrförmig ausgestaltete Latemengehäuse an seinem ventilgehäuseseitigen Ende wenigstens zwei, in radialer Richtung gesehen, radial nach innen vorspringende laternenseitige Bajonettkragen aufweist, die jeweils durch zwischen diesen ausgebildete latemenseitige Bajonettausnehmungen beiderseits begrenzt sind. Das Ventilgehäuse weist außenseits und im Umfangsbereich der Gehäuseöffnung eine entsprechende Anzahl, in radialer Richtung gesehen, radial nach außen vorspringende ventilgehäuseseitige Bajonettkragen auf, die jeweils durch zwischen diesen ausgebildete ventilgehäuseseitige Bajonettausnehmungen beiderseits begrenzt sind. Die laternenseitigen Bajonettkragen greifen in einer Offenstellung der Bajonettverbindung in die ventilgehäuseseitigen Bajonettausnehmungen ein, und sie hintergreifen in einer Schließstellung der Bajonettverbindung die ventilgehäuseseitigen Bajonettkragen nahezu deckungsgleich.

Erfindungsgemäß ist die Bajonettverbindung in ihrer Schließstellung selbsttätig formschlüssig verriegelt.

Diese Verriegelung gelingt durch mehrere Maßnahmen, die sich zum Teil gegenseitig bedingen. Zum Einen ist vorgesehen, dass das rohrförmige Latemengehäuse in dem auf den Umfang bezogenen Erstreckungsbereich wenigstens eines latemenseitigen Bajonettkragens einen Schlitz aufweist, der sich vom ventilgehäuseseitigen Ende des Latemengehäuses ein Stück weit axial in diesen und dabei, in radialer Richtung gesehen, durchgängig von innen nach außen erstreckt.

Zum anderen ist vorgesehen, dass jeder ventilgehäuseseitige Bajonettkragen radial außenseits eine in ihrer radialen Tiefe und ihrer Umfangserstreckung begrenzte nutförmige Ausnehmung aufweist, wobei in der Schließstellung der Bajonettverbindung die Ausnehmung, in Umfangsrichtung gesehen, deckungsgleich mit dem zugeordneten Schlitz positioniert Ist. In einer bevorzugten Ausgestaltung ist die jeweilige Ausnehmung, In Umfangsrichtung gesehen, mittig im zugeordneten ventilgehäuseseitigen Bajonettkragen angeordnet.

Weiterhin ist im Bereich des ventilgehäuseseitigen Endes der Lagerbuchse an dieser wenigstens eine Nase angeordnet, die zum Einen, in radialer Richtung gesehen, über den äußeren Rand der Lagerbuchse auskragt und die zum Anderen, in axialer Richtung gesehen, über die ventilgehäuseseitige Stirnseite der Lagerbuchse hinausreicht. Diese Nase ist, in radialer Richtung gesehen, federelastisch ausgebildet und greift in den zugeordneten Schlitz ein. Damit ist die vorstehend bereits erwähnte verdrehsichere Fixierung der Lagerbuchse innerhalb des Latemengehäuses sichergestellt

Die selbsttätige Verriegelung der Bajonettverbindung, die gleichzeitig auch ihr unplanmäßiges Öffnen verhindert, gelingt dadurch, dass in Verbindung mit den vorstehend dar gestellten Merkmalen in der Schließstellung der Bajonettverbindung das Ende der Nase in die zugeordnete nutförmige Ausnehmung im ventilgehäuseseitigen Bajonettkragen eingreift. Die federelastische Ausbildung der Nase erlaubt es, dass sie sich aus der Offenstellung der Bajonettverbindung heraus zunächst so weit radial nach außen aufbiegen kann, dass sie auf dem Weg in die Schließstellung der Bajonettverbindung über den äußeren Rand des ventilgehäuseseitigen Bajonettkragen übergreift und tangential über diesen hinweggleitet, bis sie unter elastischer Rückverformung nach innen in die nutförmige Ausnehmung formschlüssig einrastet. Damit ist eine formschlüssige Verbindung zwischen Lagerbuchse und damit Latemengehäuse einerseits und Ventilgehäuse andererseits sichergestellt ist.

Enfüigen von Seite 7, letater Absatz bis Seite 9, Absatz 1

Werden, wie dies weiterhin vorgeschlagen wird, zwei latemenseitige Bajonettkragen vorgesehen, die diametral einander gegenüberliegen, oder mehr als zwei vorgesehen, die gleichmäßig verteilt über den Umfang des rohrförmigen Latemengehäuses angeordnet sind, dann können das Antriebsgehäuse und damit ein an diesem vorgesehener Druckmittelanschluss wahlweise jeweils um 180 Grad oder um einen kleineren Winkel, der sich aus der Anzahl der Bajonettkragen ergibt, gegenüber dem Ventilgehäuse verdreht und damit in diesen diskreten Lagen an diesem befestigt werden.

Gemäß einem weiteren erfinderischen Gedanken ist die Betätigungsstange in einer rohrförmigen Lagerbuchse geführt, die innerhalb des Latemengehäuses angeordnet und festgelegt ist und die dessen axiale Länge weitestgehend ausnutzt. Diese Führung der Betätigungsstange dient damit auch gleichzeitig der Führung des mit dieser fest verbundenen Antriebskolbens. Da die Betätigungsstange mit dem Verschlussteil fest verbunden ist, erfährt letzterer seine axiale Führung mittelbar ebenfalls über die Lagerbuchse, so dass für diese Führungsmittel gleichfalls keine zusätzliche Bauhöhe im Rahmend er Gesamtanordnung erforderlich ist.

Die Funktion des Latemengehäuses, die neben ihrer mechanischen Verbindungsfunktion die sichere Trennung von Ventil- und Antriebsgehäuse mit den unterschiedlichen und unverträglichen Fluiden darin gewährleistet, wird durch die orwähnte Lagerbuchse nicht beeinträchtigt, da letztere wenigstens eine, in radialer Richtung gesehen, durch die Wandung eines rohrförmigen Buchsenschaftes hindurchgreifende Lagerbuchsenöffnung aufweist.

Um eine Abfuhr von Leckagen sicherzustellen, sieht ein weiterer Vorschlag vor, dass die wenigstens eine Lagerbuchsenöffnung wenigstens teilweise von der wenigstens einen Latemenöffnung fluiddurchlässig überdeckt ist. Diese wenigstens teilweise Überdeckung wird beispielsweise durch eine verdrehsichere Anordnung der Lagerbuchse innerhalb des diese aufnehmenden Latemengehäuses, beispielsweise durch eine formschlüssige Verbindung oder Verzahnung, sichergestellt. Dabei stützen die in das Latemengehäuse eingreifenden ventilgehäuseseltigen Bajonettkragen die Lagerbuchse axial nach unten ab.

Die Durchdringungsstelle zwischen der Betätigungsstange und dem Ventilgehäuse erfordert im Bereich der diesbezüglichen Gehäuseöffnung eine Abdichtung mittels einer Stangendichtung, die im Einbauzustand zur Sicherstellung einer hinreichenden Dichtwirkung unter einer ausreichenden radialen Vorspannung stehen muss. Diese radiale Vorspannung im Einbauzustand wird beim erfindungsgemäßen Hubventil erst durch eine minimale axiale Verformung der Stangendichtung im Zuge des Schließvorganges der Bajonettverbindung generiert. Dadurch lassen sich weiterhin die Stangendichtung und das Verschlussteil in Verbindung mit seiner Betätigungsstange leicht und ohne Einsatz von Spezialwerkzeugen demontieren. Dies wird gemäß einer vorteilhaften Ausführungsform dadurch erreicht, dass sich ein ventilgehäuseseitiger Buchsenflansch der Lagerbuchse auf dem Ventilgehäuse, das die Gehäuseöffnung außenseits umschließt, abstützt und dabei die zwischen Gehäuseöffnung und der querschnittserweiterten Betätigungsstange angeordnete Stangendichtung axial vorspannt.

Da nicht auszuschließen ist, dass im Betrieb des Hubventils durch den sog. "Fahrstuhleffekt" Flüssigkeit, Produkt oder Reinigungsmittel, vom Innenraum des Ventilgehäuses aus gesehen, in den Dichtungsbereich und ggf. hinter die Stangendichtung verschleppt wird, muss dafür Sorge getragen werden, dass diese verschleppten Flüssigkeiten zumindest drucklos abfließen können. Zu diesem Zweck ist vorgesehen, dass in die ventilgehäuseseitige Stirnseite der Lagerbuchse mehrere über den Umfang verteilt angeordnete Nuten eingreifen, die die Lagerbuchse an diesen Stellen durchgängig durchsetzen, wobei radial außenseits eine Drainage über die Bajonettverbindung sichergestellt ist.

Die Erfindung sieht weiterhin vor, dass die vorstehend dargestellten jeweiligen Merkmale auf ein Absperrventil Anwendung finden und das Ventilgehäuse in Form eines als Absperrventilgehäuse fungierenden ersten Ventilgehäuses ausgebildet ist.

In gleicher Weise sollen die vorstehend dargestellten jeweiligen Merkmale auf ein Tankbodenventil Anwendung finden, bei dem der zweite Anschlussstutzen von unten in einen Tankboden eines Tanks oder Behälters einmündet und das Ventilgehäuse in Form eines als Tankbodenventilgehäuse fungierenden zweiten Ventilgehäuses ausgebildet ist.

Darüber hinaus sollen die vorstehend dargestellten jeweiligen Merkmale auf ein Umschaltventil Anwendung finden, bei dem das Latemengehäuse über ein wenigstens einen vierten Anschlussstutzen aufweisendes zweites Ventilgehäuseteil mit dem Ventilgehäuseteil verbunden und dadurch das Ventilgehäuse in Form eines als Umschaltventilgehäuse fungierenden dritten Ventilgehäuses ausgebildet ist und bei dem die beiden Ventilgehäuseteile über eine zweite Verbindungsöffnung verbunden sind, in oder an der eine zweite Sitzfläche ausgebildet ist. An der Betätigungsstange ist zusätzlich ein zweiter Verschlussteil befestigt, der über eine radial wirkende zweite Verschlussteildichtung mit der zweiten Sitzfläche zusammenwirkt und die zweite Verbindungsöffnung steuert, wobei In der Schließstellung des zweiten Verschlussteils das ein erstes Verschlussteil bildende Verschlussteil und in der Schließstellung des ersten Verschlussteils das zweite Verschlussteil seine jeweilige Offenstellung einnehmen. Das dritte Ventilgehäuse wird mit Blick auf eine große Anwendungsbreite des erfindungsgemäßen Hubventils zu einem Durchgangsgehäuse, wenn es wie dies vorgeschlagen wird, an dem zweiten Ventilgehäuseteil zusätzlich zu dem vierten Anschlussstutzen einen fünften Anschlussstutzen aufweist, der dem vierten Anschlussstutzen gegenüberliegt.

Das Ventilgehäuse des vorstehend beschriebenen Absperr-, Tankboden- und des Umschaltventils wird im Bereich seines Ventilgehäuseteils gleichfalls mit Blick auf die vorstohend erwähnte Anwendungsbreite, jeweils zu einem Durchgangsgehäuse, wenn es zusätzlich zu dem ersten Anschlussstutzen einen dritten Anschlussstutzen aufweist, der dem ersten Anschlussstutzen gegenüberliegt.

Schließlich sollen die die vorstehend dargestellten jeweiligen Merkmale auf ein Doppelsitzventil Anwendung finden, das zwei seriell angeordnete, relativ zueinander bewegbare Verschlussteile aufweist, die in der Schließstellung des Doppelsitzventils das Überströmen von Fluiden von einem Ventilgehäuseteil in ein anderes verhindern, die sowohl in der Schließ- als auch in der Offenstellung einen Leckagehohlraum begrenzen, der mit der Umgebung des Doppelsitzventils verbunden ist, und das, bezogen auf eine vertikale Anordnung, oben den beiden Verschlussteilen gemeinsamen, deren jeweilige Betätigungsstange antreibenden Stellantrieb aufweist.

Falls leckagefreies Schalten erwünscht oder notwendig ist, sieht eine bevorzugte Ausgestaltung des Doppelsitzventils vor, dass beide Verschlussteile als Schieberkolben ausgebildet sind, die in der Schließstellung des Doppelsitzventils in der die Ventilgehäuseteile miteinander verbindenden, die zylindrische Sitzfläche ausbildenden Verbindungsbohrung dichtend Aufnahme finden. Das erste Verschlussteil kommt im Zuge seiner Öffnungsbewegung, bevor es die zylindrische Sitzfläche verlässt, am zweiten Verschlussteil dichtend zur Anlage und überführt letzteres bei der weiteren Öffnungsbewegung gleichfalls in eine volle Offenstellung. Das Doppelsitzventil öffnet nach oben und besitzt eine Ablaufbohrung, die in einem am ersten Verschlussteil angeordneten, das zweite Ventilgehäuseteil nach unten abgedichtet durchdringenden Rohrschaft vorgesehen ist und die den Leckagehohlraum mit der Umgebung verbindet.

Aus dem jeweiligen Ventilgehäuseteil des Doppelsitzventils wird im Bedarfsfall jeweils ein Durchgangsgehäuse, wenn das Ventilgehäuseteil zusätzlich zu dem jeweiligen Rohrstutzen einen weiteren Rohrstutzen aufweist, der dem anderen Rohrstutzen gegenüberliegt.

### KURZBESCHREIBUNG DER ZEICHNUNGEN

Eine eingehendere Darstellung ergibt sich aus der folgenden Beschreibung und den beigefügten Figuren der Zeichnung sowie aus den Ansprüchen. Während die Erfindung in den verschiedensten Ausführungsformen realisiert ist, wird in der Zeichnung ein Ausführungsbeispiel einer bevorzugter Ausführungsform der vorgeschlagenen Vorrichtung in Anwendung auf verschiedene, jeweils als Hubventil arbeitende Ventilarten (Absperrventil als Einsitz- und Doppelsitzventil; Tankboden- und Umschaltventil jeweils als Einsitzventil) dargestellt und nachfolgend nach Aufbau und Funktion beschrieben unter der Voraussetzung, dass diese Ausführungsform nur ein Beispiel für die Erfindung darstellt, nicht aber die Erfindung auf dieses speziell dargestellte Beispiel beschränkt ist.

Es zeigen
- **Figur 1**: in perspektivischer Darstellung eine Gesamtansicht des Hubventils gemäß der Erfindung in einer Ausbildung als Absperrventil;
- **Figur 2**: einen Meridianschnitt durch eine bevorzugte Ausführungsform des in seiner Schließstellung befindlichen Absperrventils gemäß **Figur 1** mit einem federschließenden Stellantrieb, wobei die Schnittebene so gewählt ist, dass sie durch die sich in der Schnittebene überdeckenden Laternen- und Lagerbuchsenöffnungen geht;
- **Figur 3**: einen Meridianschnitt durch das erfindungsgemäße Hubventil in einer Ausbildung als Doppelsitzventil;
- **Figur 4**: einen Meridianschnitt durch das erfindungsgemäße Hubventil in einer Ausbildung als Umschaltventil, wobei das in zwei Umschaltstellungen verfahrbare einheitliche Verschlussteil, welches zwei im Abstand voneinander angeordnete alternative Abdichtungsstellen aufweist, durch Druckmittelbeaufschlagung gegen die Kraft der Antriebsfeder in seine obere Umschaltstellung verbracht und die Schnittebene so gewählt ist, dass sie durch eine die Bajonettverbindung verriegelnde Nase an einer Lagerbuchse geht;
- **Figur 5**: einen Meridianschnitt durch das erfindungsgemäße Hubventil in einer Ausbildung als Tankbodenventil, wobei In der dargestellten Schließstellung ein federschließender Stellantrieb mit dem Verschlussteil eine Tankbodenöffnung verschließt und die Schnittebene wiederum so gewählt ist, dass sie durch die sich in der Schnittebene überdeckenden Laternen- und Lagerbuchsenöffnungen geht;
- **Figur 6**: in perspektivischer Darstellung eine Ausführungsform eines Laternengehäuses, das an dem einen Ende einen antriebsseitigen Latemenflansch aufweist, der die ventilgehäuseseitige Begrenzung des Antriebsgehäuses des Stellantriebs bildet, und an dessen anderem Ende die eine Hälfte eines Bajonettverschlusses ersichtlich ist;
- **Figur 7**: in perspektivischer Darstellung eine Ausführungsform eines Ventilgehäuses, wobei an der Oberseite die komplementäre andere Hälfte des Bajonettverschlusses gemäß **Figur 6** ersichtlich ist;
- **Figur 8**: in einer ersten perspektivischen Darstellung eine Ausführungsform einer Lagerbuchse, die zu dem Latemengehäuse gemäß **Figur 6** komplementär ist, wobei der Blick auf die Längsseite und auf die der Verriegelung des Bajonettverschlusses dienende Nase gerichtet ist und
- **Figur 9**: in perspektivischer Darstellung die Lagerbuchse gemäß **Figur 8** aus einem Blickwinkel von unten.

### DETAILLIERTE BESCHREIBUNG

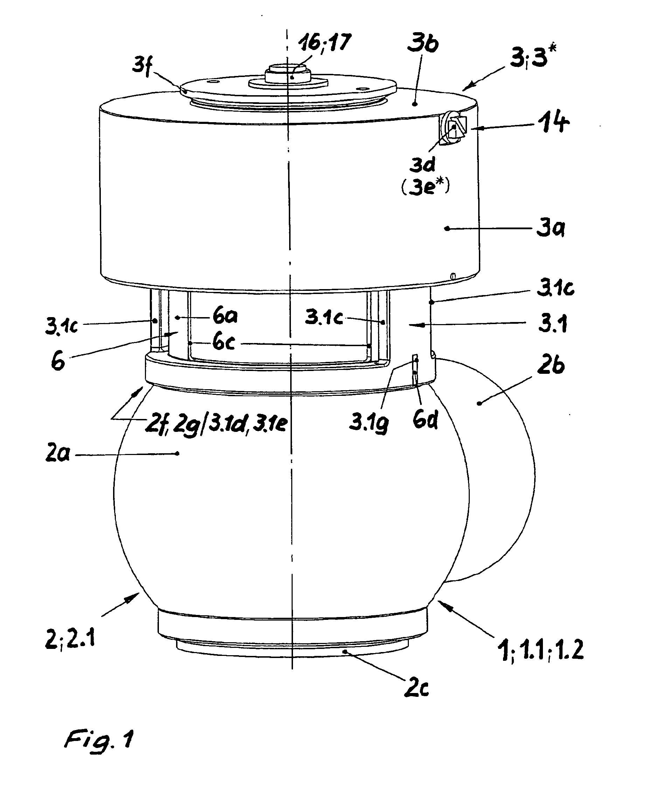

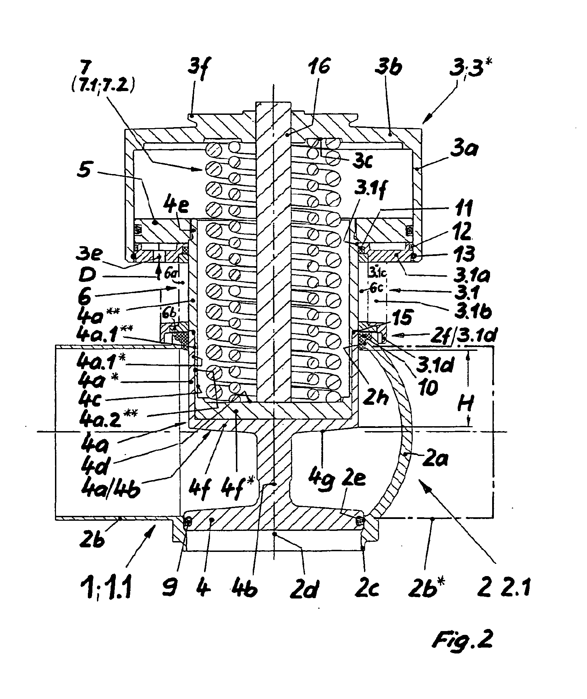

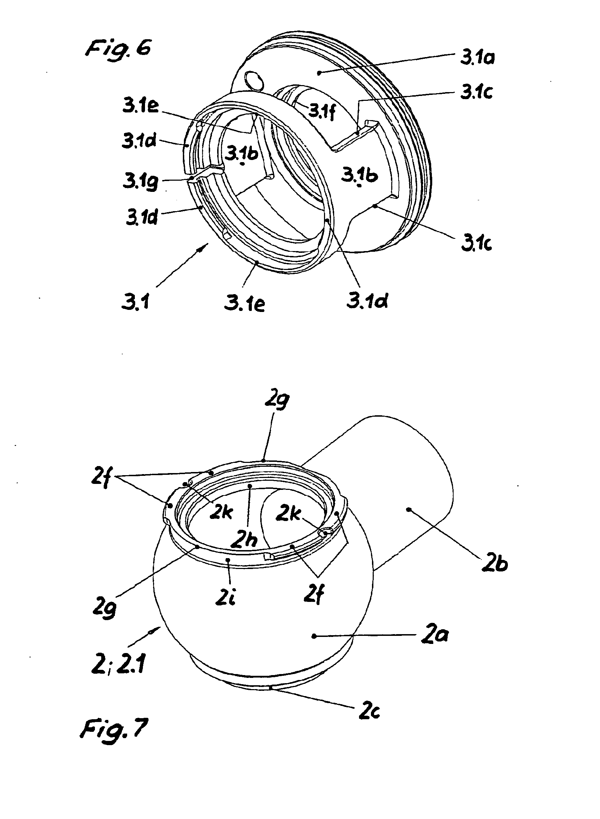

Ein als Absperrventil 1.1 ausgebildetes erfindungsgemäßes Hubventil 1 (**Figur 1**) besteht im Wesentlichen aus einem Ventilgehäuse 2 in Form eines ersten Ventilgehäuses 2.1 (Absperrventilgehäuse), das beispielhaft aus einem zentralen, vorzugsweise kugelförmig ausgebildeten Ventilgehäuseteil 2a, einem davon seitlich abgehenden ersten Anschlussstutzen 2b und einem, bezogen auf die Darstellungslage, nach unten abgehenden zweiten Anschlussstutzen 2c besteht (s. hierzu auch **Figur 7**). Es besteht weiterhin aus einem federschlleßenden ersten Stellantrieb 3 (**Figur 2**) oder einem federöffnenden zweiten Stellantrieb 3*, in dem jeweils ein Antriebskolben 5 über eine in einem Antriebsgehäuse 3a ausgebildete erste bzw. zweite Druckmittelöffnung 3e bzw. 3e* (Stellantrieb 3*) in der Regel mit pneumatischem Druckmittel D (Druckluft) beaufschlagt wird. Die Ent- und Belüftung des Stellantriebs 3, 3* erfolgt im Verlauf der Schaltbewegung auf der jeweils der Druckbeaufschlagung abgewandten Seite des Antriebskolbens 5 über eine erste Entlüftungsöffnung 3d in einem Entlüftungsstopfen 14 (**Figur 1**) bzw. eine nicht dargestellte zweite Entlüftungsöffnung in einem gleichfalls nicht dargestellten zweiten Entlüftungsstopfen. Der Stellantrieb 3, 3* ist neben der vorstehend genannten federschließenden oder federöffnenden Ausführungsform auch doppeltwirkend ausgestaltet. Die letztgenannte Ausführungsform, die nicht ebenfalls nicht dargestellt ist, besitzt neben weiteren, hier nicht genannten Modifikationen dieses Stellantriebs eine weitere Druckmittelöffnung auf der anderen Seite des Antriebskolbens 5 am Antriebsgehäuse 3a. Das Ventilgehäuseteil 2a weist zusätzlich zu dem ersten Anschlussstutzen 2b im Bedarfsfall einen dritten Anschlussstutzen 2b* auf, der dem ersten Anschlussstutzen 2b gegenüberliegt, so dass das Ventilgehäuse 2, 2.1 zu einem Durchgangsgehäuse wird.

Im Ventilgehäuse 2, 2.1 (**Figur 2**) ist zwischen den Anschlussstutzen 2b, 2c eine Verbindungsöffnung 2d angeordnet, in oder an der eine Sitzfläche 2e ausgebildet ist. Ein translatorisch zum Stellantrieb 3 hin verschieblicher Verschlussteil 4 wirkt mit der Sitzfläche 2e zusammen und steuert die Verbindungsöffnung 2d. An dem Verschlussteil 4 ist eine Betätigungsstange 4a/4b befestigt, die durch eine der Verbindungsöffnung 2d gegenüberliegende Gehäuseöffnung 2h des Ventilgehäuses 2, 2.1 aus diesem dichtend herausgeführt und mit dem Antriebskolben 5 des Stellantriebs 3, 3* fest, aber lösbar, verbunden ist. Der Stellantrieb 3, 3* weist In dem Antriebsgehäuse 3a den gegen die Kraft einer Antriebsfeder 7 bzw. 7.1, 7.2 und bei Beaufschlagung mit dem Druckmittel D verschieblichen Antriebskolben 5 auf. Die Betätigungsstange 4a/4b ist wenigstens in ihrem Durchdringungsbereich mit dem Ventilgehäuse 2, 2.1 in der Weise in ihrem Querschnitt erweitert, dass sie dort in einer topfförmigen Ausnehmung 4c einen verschlussteilseitigen Teil der Antriebsfeder 7 bzw. 7.1, 7.2 aufnimmt.

Das Ventilgehäuse 2, 2.1 und der pneumatische Stellantrieb 3, 3* sind über ein Latemengehäuse 3.1 unmittelbar miteinander verbunden. Dabei bildet ein auf der Seite des Stellantriebs 3, 3* am Latemengehäuse 3.1 vorgesehener antriebsseitiger Latemenflansch 3.1a (s. hierzu auch **Figur 6**) die ventilgehäuseseitige Begrenzung des Antriebsgehäuses 3a. Der Stellantrieb 3, 3* ist auf seiner dem Ventilgehäuse 2, 2.1 abgewandten Seite mit einem Deckelteil 3b verschlossen (**Figuren 2****,** **1**), der außenseits und zentrisch in einem durchmesserkleineren Klemmflansch 3f seine Fortsetzung findet und auch zentrisch von einer mit der Betätigungsstange 4a/4b vorzugsweise lösbar verbundenen Rückmeldestange 16 bzw. einer modifizierten Rückmeldestange 17 (Stellantrieb 3*) durchdrungen ist. Entweder zeigt in der einfachsten Ausprägung das obere Ende der Rückmeldestange 16, 17 die jeweilige Stellung des Hubventils 1 optisch an oder das obere Ende wird berührend oder berührungsfrei erfasst und über einen am Klemmflansch 3f angeordneten Steuerkopf an eine das Hubventil 1 steuernde interne oder externe Steuerung rückgemeldet.

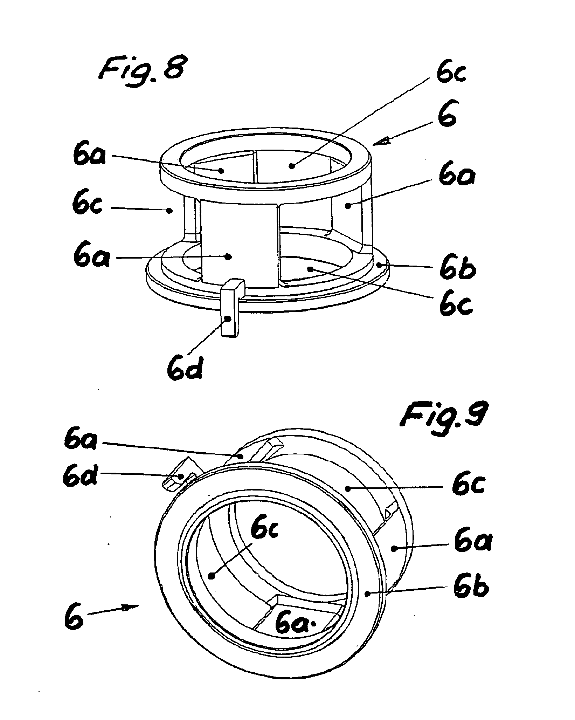

Das Latemengehäuse 3.1 (**Figur 6**) weist einen rohrförmigen Latemenschaft 3.1 b mit dem antriebsseitigen Latemenflansch 3.1a am einen Ende und Mittel 3.1d, 3.1e zur Verbindung des Latemengehäuses 3.1 mit dem Ventilgehäuse 2, 2.1 am anderen Ende sowie zwei diametral im Laternenschaft 3.1b angeordnete, diesen durchbrechende Latemenöffnungen 3.1c auf. Bei den Mitteln 3.1d und 3.1e handelt es sich um einen latemenseitigen Bajonettkragen 3.1 d und eine latemenseitige Bajonettausnehmung 3.1 e. Die beiden Laternenöffnungen 3.1 c sind wenigstens teilweise von drei Lagerbuchsenöffnungen 6c in einer Lagerbuchse 6 (**Figuren 8, 9**) fluiddurchlässig überdeckt (**Figur 1**), so dass über diese Öffnungen 3.1c, 6c eine Verbindung zwischen der Umgebung des Absperrventils 1.1 und einer querschnittserweiterten Betätigungsstange 4a, einem sog. Druckausgleichskolben, besteht (siehe auch **Figur 2**). Die Lagerbuchsenöffnungen 6c sind in einem rohrförmigen Buchsenschaft 6a der Lagerbuchse 6 ausgebildet, wobei der Buchsenschaft 6a an seinem unteren Ende in einen radial nach außen vorspringenden ventilgehäuseseitigen Buchsenflansch 6b übergeht.

Am unteren Ende des Ventilgehäuses 2, 2.1 (**Figur 2**) ist oberhalb des zweiten Anschlussstutzens 2c, der die Verbindungsöffnung 2d beispielsweise zu einer nicht dargesteltten, fortführenden Rohrleitung oder zu einem Tank begrenzt, in der Innenwandung des zentralen Ventilgehäuseteils 2a, konzentrisch zu dessen vertikaler Symmetrieachse, die Sitzfläche 2e ausgebildet, die im Ausführungsbeispiel zylindrisch ausgeführt ist und in der der als Schieberkolben ausgebildete Verschlussteil 4 mit seiner Verschlussteildichtung 9 dichtend Aufnahme findet. Die Verschlussteildichtung 9 wirkt rein radial mit der zylindrischen Sitzfläche 2e zusammen und die Schließstellung des Absperrventils 1, 1.1 ist bevorzugt durch einen festen Anschlag des Antriebskolbens 5 im Stellantrieb 3, 3*, vorzugsweise am antriebsseitigen Laternenflansch 3.1a, begrenzt.

Es ist weiterhin vorgesehen, den Verschlussteil 4 als Sitzteller mit einer axial oder einer axial/radial wirkenden Verschlussteildichtung 9 auszubilden, der mit der zugeordneten Sitzfläche 2e, die dann axial oder kegelförmig ausgeführt ist, zusammenwirkt, und die Schließstellung des Hubventils 1,1.1 durch einen festen Anschlag des Verschlussteils 4 an der jeweiligen Sitzfläche 2e zu begrenzen.

Der Verschlussteil 4 geht oberhalb in eine querschnittsreduzierte Verbindungsstange 4b über (**Figur 2**), die sich andererseits in die zu dem Druckausgleichskolben ausgebildete querschnittserweiterte Betätigungsstange 4a erweitert. Dem Verschlussteil 4 ist damit zur Kompensation von Druckstößen im Innenraum des Ventilgehäuses 2, 2.1 eine Gegendruckfläche 4g an der querschnittserweiterten Betätigungsstange im Übergangsbereich zur querschnittsreduzierten Betätigungsstange 4b zugeordnet. Die querschnittserweiterte Betätigungsstange 4a setzt sich mit ungeschmälertem Querschnitt nach oben bis zum Antriebskolben 5 fort und ist mit diesem an ihrem antriebsseitigen Stangenende 4e, das vorzugsweise als Bolzengewinde ausgeführt ist, fest, aber lösbar, verbunden. Die querschnittserweiterte Betätigungsstange 4a durchgreift das zentrale Ventilgehäuseteil 2a obenseits in der Gehäuseöffnung 2h (siehe hierzu auch **Figur 7**), wobei diese gleitende Durchführung mittels einer in der Gehäuseöffnung 2h angeordneten Stangendichtung 10 abgedichtet ist.

Die Betätigungsstange 4a/4b mit dem Verschlussteil 4 ist in der rohrförmigen Lagerbuchse 6 geführt, die innerhalb des Latemengehäuses 3.1 angeordnet und festgelegt ist und die dessen axiale Länge weitestgehend ausnutzt. Dabei stützt sich der ventilgehäuseseitige Buchsenflansch 6b der Lagerbuchse 6 auf dem Ventilgehäuse 2, 2.1, das die Gehäuseöffnung 2h außenseits umschließt, ab und spannt dabei die zwischen der Gehäuseöffnung 2h und der querschnittserweiterten Betätigungsstange 4a angeordnete Stangendichtung 10 axial vor. Die Stangendichtung 10 ist in eine ringförmigen Ausnehmung innerhalb eines ringförmigen Stutzens 2i eingebettet, in den das obere Ende des Ventilgehäuseteils 2a ausmündet (**Figur 7**). In die ventilgehäuseseitige Stirnseite der Lagerbuchse 6 greifen mehrere über den Umfang verteilt angeordnete Nuten ein, die die Lagerbuchse 6 an diesen Stellen durchgängig durchsetzen. Diese Nuten dienen dem weiter oben erwähnten Zweck.

Oberhalb der Lagerbuchse 6 durchdringt die querschnittserweiterte Betätigungsstange 4a den antriebsseitigen Latemenflansch 3.1a in einer Durchtrittsöffnung 3.1f (**Figuren 6****,** **2**), wobei dieser Durchtritt mittels einer ersten Dichtung 11 des Antriebsgehäuses 3a abgedichtet ist. Diese erste Dichtung 11 stellt sicher, dass kein Druckmittel D, das dem zwi schen der Unterseite des Antriebskolbens 5, dem Antriebsgehäuse 3a und dem antriebsseitigen Latemenflansch 3.1 a gebildeten Raum auf dem Weg über die erste Druckmittelöffnung 3e zugeführt wird, von diesem Raum in den Ringspalt zwischen Lagerbuchse 6 und querschnittserweiterten Betätigungsstange 4a entweichen kann. Die Abdichtung des antriebsseitigen Laternenflansches 3.1 a gegenüber dem Antriebsgehäuse 3a erfolgt über eine zweite Dichtung 12, seine Festlegung im Antriebsgehäuse 3a wird über einen Sicherungsring 13 erreicht. Der Antriebskolben 5 ist gegenüber der innenseitigen Mantelfläche des Antriebsgehäuses 3a mittels einer nicht bezeichneten Kolbendichtung gleitend abgedichtet.

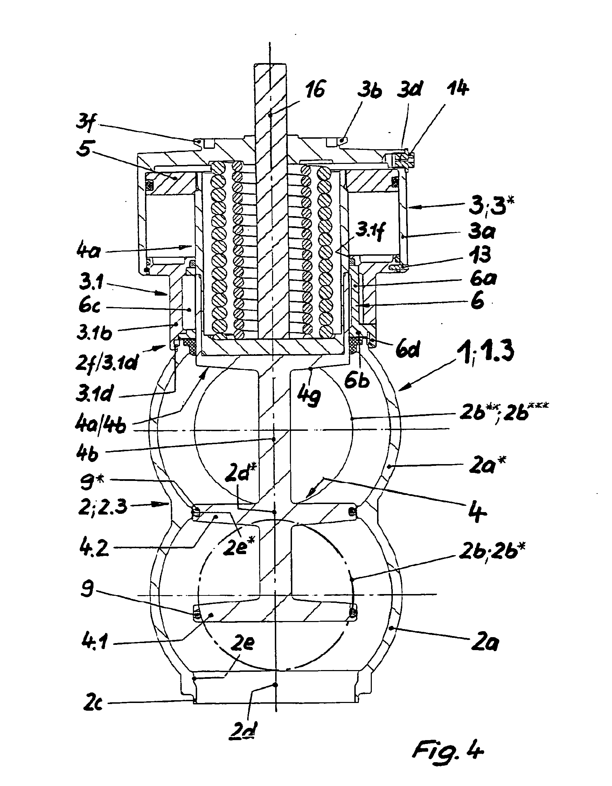

In der querschnittserweiterten Betätigungsstange 4a ist die topfförmige Ausnehmung 4c ausgebildet, die sich, querschnittsmäßig gesehen, vom antriebsseitigen Stangenende 4e beginnend, ungeschmälert bis an das untere Ende der querschnittserweiterten Betätigungsstange 4a erstreckt. Dabei ragt die querschnittserweiterte Betätigungsstange 4a in der Schließstellung des Absperrventils 1.1 wenigstens um den vollen Ventihub H in das Ventilgehäuseteil 2a hinein (**Figur 2**), so dass in der Offenstellung des Absperrventils 1.1, das zum Stellantrieb 3 hin öffnet, d.h. nach Vollzug des vollen Öffnungshubes H, das untere Ende der querschnittserweiterten Betätigungsstange 4a gerade noch gegenüber der Stangendichtung 10 eine radiale Abdichtung erfährt (siehe auch **Figur 4**). Ein Topfboden 4f bzw. 4f* der topfförmigen Ausnehmung 4c dient der Antriebsfeder 7 bzw. 7.1, 7.2, die vorzugsweise als Schraubenfeder ausgeführt ist und die aus mehr als einer Antriebsfeder in Form eines Federpakets 7.1, 7.2 bestehen kann, als bewegliches, verschlussteilseitiges Federwiderlager 4d. Die Antriebsfeder 7 bzw. 7.1, 7.2 stützt sich andererseits an dem Deckelteil 3b des Stellantriebs 3 ab, wobei zwecks zentrischer Fixierung der Antriebsfeder 7 bzw. 7.1, 7.2 dort vorzugsweise eine nicht bezeichnete kreisförmige Ausnehmung vorgesehen ist. Der Deckelteil 3b bildet somit ein unverschiebliches, antriebsseitiges Federwiderlager 3c.

Zur Erfüllung der US-amerikanischen Forderungen im Zusammenhang mit den vorstehend erwähnten sog. 3-A Sanitary Standards for Compression-Type Valves, die unter anderem verlangen, dass der Stellantrieb 3, 3* leicht von dem Ventilgehäuse 2, 2.1 und der Betätigungsstange 4a/4b des Verschlussteils 4 demontierbar sein muss, ist die Betätigungsstange 4a/4b teilbar gefügt (**Figur 2**). Diese Teilung erfolgt vorzugsweise im Bereich der querschnittserweiterten Betätigungsstange 4a, und zwar in einen verschlussteilseitigen Teil der Betätigungsstange 4a* und einen antriebsseitigen Teil der Betätigungsstange 4a**. Eine mittels einer dritten Dichtung 15 abgedichtete form- und kraftschlüssige Verbindung dieser Teile 4a*, 4a** erfolgt über ein Muttergewinde 4a.1 * am verschlussteilseitigen Teil 4a* und ein Bolzengewinde 4a.1** am antriebsseitigen Teil 4a**. Der antriebsseitige Teil der Betätigungsstange 4a** verlängert sich an seinem verschlussteilseitigen Ende in einen Topf 4a.2**, der in den verschlussteilseitigen Teil der Betätigungsstange 4a* eingreift und dort die topfförmige Ausnehmung 4c mit dem zweiten Topfboden 4f* ausbildet. Somit verbleibt bei der Trennung der querschnittserweiterten Betätigungsstange 4a ein unterer Teil 4a* über die querschnittsreduzierte Verbindungsstange 4b am Verschlussteil 4 und ein oberer Teil 4a** ist mit dem Antriebskolben 5 fest, aber lösbar, verbunden. Der Topf 4a.2**, der innenseits die Kontur der topfförmigen Ausnehmung 4c aufweist, wie sie bei der ungeteilten Ausführung vorgesehen ist, verhindert, dass sich bei der Trennung der Teile 4a*, 4a** die in ihm angeordnete vorgespannte Antriebsfeder 7 bzw. 7.1, 7.2 unkontrolliert entspannen kann.

Eine form- und kraftschlüssige Verbindung zwischen dem Ventilgehäuse 2, 2.1 einerseits und dem Laternengehäuse 3.1 und damit auch dem Stellantrieb 3, 3* andererseits ist mit einer Bajonettverbindung 2f, 2g/3.1d, 3.1e oder einer bajonettverschlussähnliche Verbindung vorgesehen (**Figur 1** in Verbindung mit den **Figuren 2****,** **6, 7**). Hierzu weist das Laternengehäuse 3.1 (**Figur 6**) an seinem ventilgehäuseseitigen Ende wenigstens zwei, in radialer Richtung gesehen, radial nach innen vorspringende laternenseitige Bajonettkragen 3.1d auf, die jeweils durch zwischen diesen ausgebildete latemenseitige Bajonettausnehmungen 3.1e beiderseits begrenzt sind. Das Ventilgehäuse 2, 2.1 (**Figur 7**) besitzt, außenseits und im Umfangsbereich der Gehäuseöffnung 2h, eine entsprechende Anzahl, in radialer Richtung gesehen, radial nach außen vorspringende ventilgehäuseseitige Bajonettkragen 2f, die jeweils durch zwischen diesen ausgebildete ventilgehäuseseitige Bajonettausnehmungen 2g beiderseits begrenzt sind. Die laternenseitigen Bajonettkragen 3.1d greifen in einer Offenstellung der Bajonettverbindung in die ventilgehäuseseitigen Bajonettausnehmungen 2g ein, und sie hintergreifen in einer Schließstellung der Bajonettverbindung die ventilgehäuseseitigen Bajonettkragen 2f nahezu deckungsgleich (Bajonettverschluss 2f/3.1d).

Die beiden ventilgehäuseseitigen Bajonettkragen 2f sind gegenüber dem ersten Anschlussstutzen 2b vorzugsweise jeweils um 90 Grad versetzt am Ventilgehäuseteil 2a angeordnet, so dass das vorzugsweise stoffschlüssige Fügen der Verbindung zwischen erstem Anschlussstutzen 2b und Ventilgehäuseteil 2a, das in der Regel durch maschinelle orbitale Schweißung erfolgt, durch diese ventilgehäuseseitigen Bajonettkragen 2f nicht behindert wird. Die ventilgehäuseseitige Bajonettausnehmung 2g greift radial innenseits jeweils bis auf den ringförmigen Stutzen 2i ein. Im dargestellten Ausführungsbeispiel bilden zwei diametral angeordnete ventilgehäuseseitigen Bajonettkragen 2f und entsprechend zwei ventilgehäuseseitige Bajonettausnehmungen 2g den einen Teil der Bajonettverbindung 2f, 2g/3.1d, 3.1e. Die zwei diametral angeordneten latemenseitigen Bajonettkragen 3.1 und die zwei latemenseitigen Bajonettausnehmungen 3.1 e bilden den anderen Teil der Bajonettverbindung 2f, 2g/3.1d, 3.1e. Eine andere vorteilhafte Ausführungsform der Bajonettverbindung 2f, 2g/3.1d, 3.1e sieht mehr als zwei latemenseitige Bajonettkragen 3.1d vor, die gleichmäßig verteilt über den Umfang des rohrförmigen Latemengehäuses 3.1 angeordnet sind. Der ventilgehäuseseitige Teil der Bajonettverbindung 2f, 2g ist in diesem Fall komplementär ausgebildet.

Die Bajonettverbindung 2f, 2g/3.1d, 3.1e oder die bajonettähnliche Verbindung ist in ihrer Schließstellung selbsttätig formschlüssig verriegelt (**Figuren 1****,** **4****,** **6, 7**). Zu diesem Zweck weist das rohrförmige Latemengehäuse 3.1 oder sein rohrförmiger Laternenschaft 3.1 b in dem auf den Umfang bezogenen Erstreckungsbereich wenigstens eines latemenseitigen Bajonettkragens 3.1d einen Schlitz 3.1g auf (**Figuren 6****,** **1**), der sich vom ventilgehäuseseitigen Ende des Laternengehäuses 3.1 ein Stück weit axial in diesen und dabei, in radialer Richtung gesehen, durchgängig von innen nach außen erstreckt.

Jeder ventilgehäuseseitige Bajonettkragen 2f besitzt radial außenseits eine in ihrer radialen Tiefe und ihrer Umfangserstreckung begrenzte nutförmige Ausnehmung 2k (**Figur 7**), wobei in der Schließstellung der Bajonettverbindung die Ausnehmung 2k, in Umfangsrichtung gesehen, deckungsgleich mit dem zugeordneten Schlitz 3.1g positioniert ist. Dabei ist die jeweilige Ausnehmung 2k, in Umfangsrichtung gesehen, vorzugsweise mittig im zugeordneten ventilgehäuseseitigen Bajonettkragen 2f angeordnet.

Im Bereich des ventilgehäuseseitigen Endes der Lagerbuchse 6 ist an dieser wenigstens eine Nase 6d angeordnet (**Figuren 8, 9,** **4****,** **1**), die zum Einen, in radialer Richtung gesehen, über den äußeren Rand der Lagerbuchse 6 auskragt und die zum Anderen, in axialer Richtung gesehen, über die ventilgehäuseseitige Stirnseite der Lagerbuchse 6 hinausreicht. Die Nase 6d ist, in radialer Richtung gesehen, federelastisch ausgebildet und greift in den zugeordneten Schlitz 3.1 g ein (**Figur 1**), wodurch eine eindeutige Festlegung der Lagerbuchse 6 in dem Latemengehäuse 3.1 in Umfangsrichtung sichergestellt ist.

Zur selbsttätigen formschlüssigen Verriegelung der Bajonettverbindung 2f, 2g/3.1d, 3.1 e ist vorgesehen, dass in deren Schließstellung das Ende der Nase 6d in die zugeordnete Ausnehmung 2k eingreift (**Figur 4**).

Die vorstehend beschriebenen Merkmale des erfindungsgemäßen Hubventils 1 finden in vorteilhafter Weise Anwendung auf ein Umschaltventil 1.3 (**Figur 4**), bei dem das Laternengehäuse 3.1 über ein wenigstens einen vierten Anschlussstutzen 2b** aufweisendes zweites Ventilgehäuseteil 2a* mit dem Ventilgehäuseteil 2a verbunden und dadurch das Ventilgehäuse 2, 2.3 in Form eines als Umschaltventilgehäuse fungierenden dritten Ventilgehäuses 2.3 ausgebildet ist. Die beiden Ventilgehäuseteile 2a, 2a* sind über eine zweite Verbindungsöffnung 2d* verbunden, in oder an der eine zylindrisch ausgebildete zweite Sitzfläche 2e* ausgebildet ist. An der Betätigungsstange 4a/4b ist im Bereich der querschnittsreduzierten Betätigungsstange 4b zusätzlich ein zweiter Verschlussteil 4.2 befestigt, der über eine radial wirkende zweite Verschlussteildichtung 9* mit der zweiten Sitzfläche 2e* zusammenwirkt und die zweite Verbindungsöffnung 2d* steuert. In der Schließstellung des zweiten Verschlussteils 4.2 nimmt das ein erstes Verschlussteil 4.1 bildende Verschlussteil 4 und in der Schließstellung des ersten Verschlussteils 4.1 nimmt das zweite Verschlussteil 4.2 seine jeweilige Offenstellung ein.

Aus dem Ventilgehäuseteil 2a wird im Bedarfsfall ein Durchgangsgehäuse, wenn dieses zusätzlich zu dem ersten Anschlussstutzen 2b einen dritten Anschlussstutzen 2b* aufweist, der dem ersten Anschlussstutzen 2b gegenüberliegt. In äquivalenter Weise wird aus dem zweiten Ventilgehäuseteil 2a* im Bedarfsfall ein Durchgangsgehäuse, wenn dieses zusätzlich zu dem vierten Anschlussstutzen 2b** einen fünften Anschlussstutzen 2b*** aufweist, der dem vierten Anschlussstutzen 2b** gegenüberliegt.

Mit der vorstehenden Konfiguration wird die Umschaltfunktion realisiert, bei der in der dargestellten oberen Stellung des Verschlussteils 4, in der sein zweiter Verschlussteil 4.2 eine Schließstellung einnimmt, eine Verbindung zwischen dem ersten und ggf. dritten Anschlussstutzen 2b bzw. 2b* einerseits und dem zweiten Anschlussstutzen 2c andererseits hergestellt ist. In der unteren Stellung des Verschlussteils 4, in der sein erster Verschlussteil 4.1 eine Schließstellung einnimmt, sind der vierte und ggf. fünfte Anschlussstutzen 2b** bzw. 2b*** einerseits mit dem ersten und ggf. dritten Anschlussstutzen 2b bzw. 2b* andererseits verbunden.

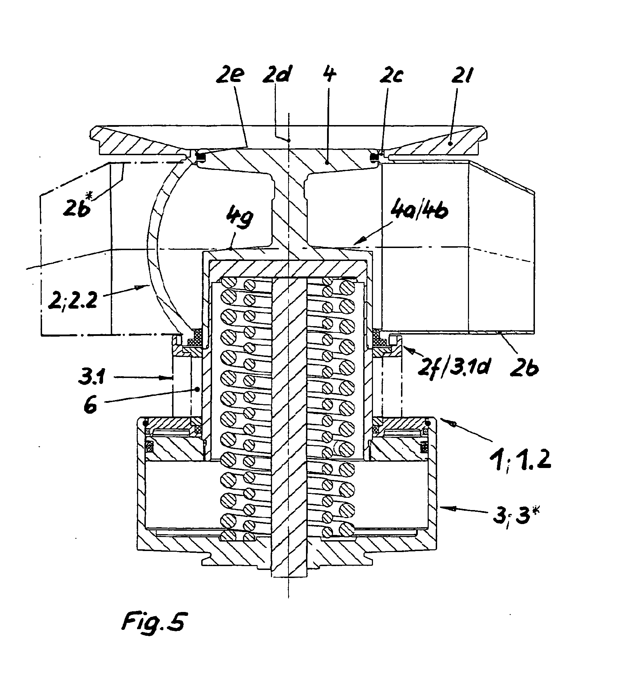

Gemäß einem weiteren Vorschlag finden die vorstehend beschriebenen Merkmale des erfindungsgemäßen Hubventils 1 auf ein Tankbodenventil 1.2 Anwendung (Figur 5), bei dem der zweite Anschlussstutzen 2c von unten in einen Tankboden 21 eines Tanks oder Behälters einmündet und das Ventilgehäuse 2, 2.2 in Form eines als Tankbodenventilgehäuse fungierenden zweiten Ventilgehäuses 2.2 ausgebildet ist. Aus letzterem wird im Bedarfsfall ein Durchgangsgehäuse, wenn dieses an dem Ventilgehäuseteil 2a zusätzlich zu dem ersten Anschlussstutzen 2b einen dritten Anschlussstutzen 2b* aufweist, der dem ersten Anschlussstutzen 2b gegenüberliegt.

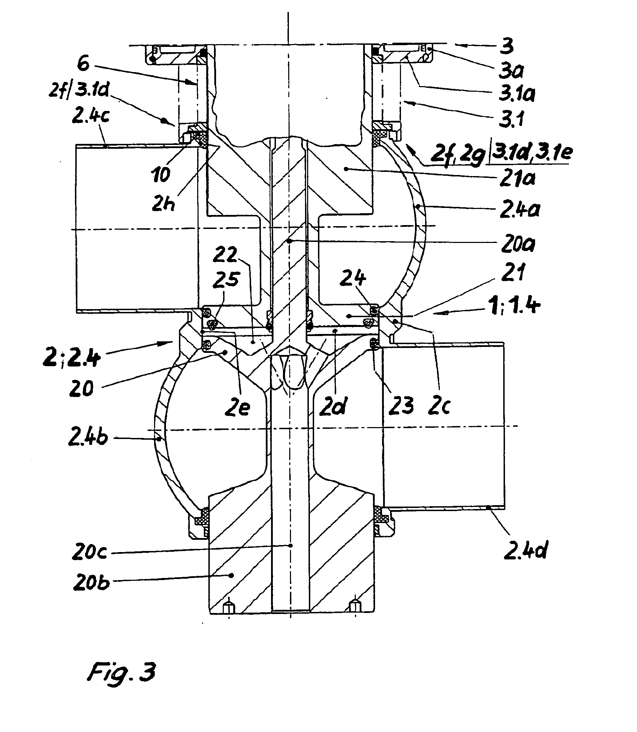

Schließlich finden die vorstehend beschriebenen Merkmale des erfindungsgemäßen Hubventils 1 in vorteilhafter Weise Anwendung auf ein Doppelsitzventil 1.4 (Figur 3), bei dem das Latemengehäuse 3.1 mit einem wenigstens einen ersten Rohrstutzen 2.4c und den zweiten Anschlussstutzen 2c aufweisenden oberen Ventilgehäuseteil 2.4a verbunden ist. Dabei entsprechen der obere Ventilgehäuseteil 2.4a dem vorstehend beschriebenen Ventilgehäuseteil 2a und der erste Rohrstutzen 2.4c dem vorstehend beschriebenen ersten Anschlussstutzen 2b. Zwischen dem ersten Rohrstutzen 2.4c und dem zweiten Anschlussstutzen 2c ist die Verbindungsöffnung 2d im oberen Ventilgehäuseteil 2.4a angeordnet, in oder an der die Sitzfläche 2e ausgebildet ist. Der Verbindungsöffnung 2d gegenüberliegend befindet sich die Gehäuseöffnung 2h, über die ein Zugang zum Stellantrieb 3 auf dem Weg über das Latemengehäuse 3.1 gegeben ist. Insoweit entspricht die Gehäusekonfiguration jener der vorbeschriebenen Art bei einem als Einsitzventil arbeitenden Hubventil 1. Der die Verbindungsöffnung 2d umschließende zweite Anschlussstutzen 2c verbindet das obere Ventilgehäuseteil 2.4a mit einem unteren Ventilgehäuseteil 2.4b, das in wenigstens einen zweiten Rohrstutzen 2.4d ausmündet, und es liegt semit das Ventilgehäuse 2, 2.4 in Form eines als Doppelsitzventilgehäuse fungierenden vierten Ventilgehäuses 2.4 vor.

In der Mantelfläche der die beiden Ventilgehäuseteile 2.4a, 2.4b miteinander verbindenden Verbindungsöffnung 2d ist die zylindrische Sitzfläche 2e ausgebildet, die mit einem unabhängig angetriebenen, ersten Verschlussteil 20 und einem, bezogen auf die vertikale Normallage, darüber angeordneten, abhängig angetriebenen zweiten Verschlussteil 21 zusammenwirkt. Beide Verschlussteile 20, 21 sind als sog. Schieberkolben mit jeweils radialen Dichtungsmitteln (Dichtungen im sog. Gleiteingriff) ausgebildet, wobei das erste Verschlussteil 20 an seiner zylindrischen Mantelfläche eine erste Verschlussteildichtung 23 und das zweite Verschlussteil 21 an seiner zylindrischen Mantelfläche eine zweite Verschlussteildichtung 24 aufweisen.

Im Zuge der Öffnungsbewegung des Doppelsitzventils 1.4 kommt zunächst das erste Verschlussteil 20 nach einem Teilhub an einer in der Stirnfläche des zweiten Verschlussteils 21 angeordneten Mitteldichtung 25 zur Anlage, so dass dann im Zuge der weiteren Öffnungsbewegung beide Verschlussteile 20, 21 in ihre volle Offenstellung gelangen. Zwischen den beiden Verschlussteilen 20, 21 ist sowohl in der Schließ- als auch in der Offenstellung ein Leckagehohlraum 22 vorgesehen, der über eine Ablaufbohrung 20c mit der Umgebung des Doppelsitzventils 1.4 verbunden ist. Die Ablaufbohrung 20c erstreckt sich dabei koaxial durch einen rohrförmigen Schaft in Form eines Druckausgleichskolbens 20b, der mit dem ersten Verschlussteil 20 verbunden, durch das untere Ventilgehäuseteil 2.4b hindurch- und aus diesem nach unten herausgeführt ist.

Das erste Verschlussteil 20 ist obenseits mit einer ersten Betätigungsstange 20a verbunden, die in den oberhalb des zweiten Ventilgehäuses 2.4a angeordneten, im Einzelnen nicht dargestellten Stellantrieb 3 hineingeführt ist. Das zweite Verschlussteil 21 verlängert sich oberhalb In eine als zweiter Druckausgleichskolben ausgebildete zweite Betätigungsstange 21 a, die in Form einer Hohlstange die erste Betätigungsstange 20a konzentrisch umschließt und gleichfalls in den Stellantrieb 3 hineingeführt ist. Der Stellantrieb 3, bevorzugt ein druckmittelbeaufschlagter Kolben/Feder-Antrieb, ist im allgemeinsten Fall befähigt, sowohl die Öffnungs- und Schließbewegung der Verschlussteile 20, 21 als auch deren voneinander unabhängige Zuge einer sog. Sitzreinigung neinander unabhängige jeweilige Teilhubbewegung im Zuge einer sog. Sitzreinigung zu generieren.

Aus dem Ventilgehäuseteil 2.4a, 2.4b wird im Bedarfsfall jeweils ein Durchgangsgehäuse, wenn das Ventilgehäuseteil 2.4a, 2.4b zusätzlich zu dem jeweiligen Rohrstutzen 2.4c, 2.4d einen weiteren Rohrstutzen aufweist, der dem anderen Rohrstutzen gegenüberliegt.

Das Laternengehäuse 3.1, die in ihm angeordnete Lagerbuchse 6, die die zweite Betätigungsstange 21 a führt und die in Verbindung mit der Stangendichtung 10 die zweite Betätigungsstange 21 a gegenüber dem oberen Ventilgehäuseteil 2.4a abdichtet und die Anordnung und Befestigung des Laternengehäuses 3.1 über den antriebsseitigen Laternenflansch 3.1 a am Antriebsgehäuse 3a sind jeweils völlig identisch zu den entsprechenden Bauteilen bei den jeweils als Einsitzventil arbeitenden Hubventilen 1 der vorbeschriebenen Art ausgeführt. Diese Feststellung bezieht sich auch auf die erfindungsgemäße Vorrichtung in Form des vorbeschriebenen Bajonettverschlusses 2f/3.1d und seine vielfältigen Modifikationen und Abwandlungen.

Aus dem oben Genannten wird verständlich, dass verschiedene Modifikationen und Varianten realisiert werden können, ohne vom Konzept der vorliegenden Erfindung abzuweichen. Dies ist so zu verstehen, dass keine Beschränkung auf die beschriebene Ausführungsform der Vorrichtung beabsichtigt ist, welche hier dargestellt und beschrieben oder nur beschrieben worden ist. Die Offenbarung soll alle solchen Modifikationen umfassen, die sich innerhalb des von den Ansprüchen beanspruchten Schutzumfangs befinden.

### BEZUGSZEICHENLISTE DER VERWENDETEN ABKÜRZUNGEN

- 1: Hubventil (allgemein)
- 1.1: Absperrventil
- 1.2: Umschaltventil
- 1.3: Tankbodenventil
- 1.4: Doppelsitzventil

- 2: Ventilgehäuse (allgemein)

- 2a: Ventilgehäuseteil
- 2b: erster Anschlussstutzen
- 2c: zweiter Anschlussstutzen
- 2d: Verbindungsöffnung
- 2e: Sitzfläche (zylindrisch; kegelförmig, axial)
- 2f: ventilgehäuseseitiger Bajonettkragen
- 2g: ventilgehäuseseitige Bajonettausnehmung
- 2h: Gehäuseöffnung
- 2i: ringförmiger Stutzen
- 2k: nutförmige Ausnehmung

### Abspenventil (1.1)

- 2.1: erstes Ventilgehäuse (Absperrventilgehäuse)
- 2b*: dritter Anschlussstutzen

### Tankbodenventil (1.2)

- 2.2: zweites Ventilgehäuse (Tankbodenventilgehäuse)
- 2b*: dritter Anschlussstutzen
- 2l: Tankboden

### Umschaltventil (1.3)

- 2.3: drittes Ventilgehäuse (Umschaltventilgehäuse)
- 2a*: zweites Ventilgehäuseteil
- 2b*: dritter Anschlussstutzen
- 2b**: vierter Anschlussstutzen
- 2b***: fünfter Anschlussstutzen
- 2d*: zweite Verbindungsöffnung
- 2e*: (zylindrische) zweite Sitzfläche

- 4.1: erster Verschlussteil
- 4.2: zweiter Verschlussteil

- 9*: zweite Verschlussteildichtung

- 3: Antrieb (federschließend; federöffnend)
- 3a: Antriebsgehäuse
- 3b: Deckelteil
- 3c: antriebsseitiges Federwiderlager
- 3d: Entlüftungsöffnung
- 3e: Druckmittelöffnung
- 3e*: zweite Druckmittelöffnung
- 3f: Klemmflansch

- 3.1: Latemengehäuse
- 3.1a: antriebsseitiger Latemenflansch
- 3.1b: rohrförmiger Latemenschaft
- 3.1c: Laternenöffnung
- 3.1d: laternenseitiger Bajonettkragen
- 3.1e: latemenseitige Bajonettausnehmung
- 3.1f: Gehäusering
- 3.1g: Schlitz

- 2f, 2g/3.1d, 3.1e: Bajonettverbindung
- 2f/3.1d: Bajonettverschluss

- 4: Verschlussteil (allgemein)
- 4a/4b: Betätigungsstange
- 4a: querschnittserweiterte Betätigungsstange (Druckausgleichskolben)
- 4b: querschnittsreduzierte Betätigungsstange
- 4c: topfförmige Ausnehmung
- 4d: verschlussteilseitiges Federwiderlager
- 4e: Verbindungsende
- 4f: Topfboden
- 4f*: zweiter Topfboden
- 4g: Gegendruckfläche

- 4a*: unterer Teil des Druckausgleichskolbens
- 4a**: oberer Teil des Druckausgleichskolbens
- 4a.1*: Muttergewinde (am unteren Teil 4a*)
- 4a.1**: Bolzengewinde (am oberen Teil 4a**)
- 4a.2**: Topf

- 5: Antriebskolben

- 6: Lagerbuchse
- 6a: Buchsenschaft
- 6b: Buchsenflansch
- 6c: Lagerbuchsenöffnung
- 6d: Nase

- 7: Antriebsfeder
- 7.1: erste Antriebsfeder
- 7.2: zweite Antriebsfeder

- 9: Verschlussteildichtung

- 10: Stangendichtung
- 11: erste Dichtung (Antriebsgehäuse)
- 12: zweite Dichtung (Antriebsgehäuse)
- 13: Sicherungsring
- 14: Entlüftungsstopfen
- 15: dritte Dichtung (Druckausgleichskolben)
- 16: Rückmeldestange
- 17: modifizierte Rückmeldestange

### Doppelsitzventil (1.4)

- 2.4: viertes Ventilgehäuse (Doppelsitzventilgehäuse)
- 2.4a: oberer Ventilgehäuseteil
- 2.4b: unterer Ventilgehäuseteil
- 2.4c: erster Rohrstutzen
- 2.4d: zweiter Rohrstutzen

- 20: erstes Verschlussteil
- 20a: erste Betätigungsstange
- 20b: erster Druckausgleichskolben
- 20c: Ablaufbohrung

- 21: zweites Verschlussteil
- 21a: zweite Betätigungsstange (zweiter Druckausgleichskolben)

- 22: Leckagehohlraum
- 23: erste Verschlussteildichtung
- 24: zweite Verschlussteildichtung
- 25: Mitteldichtung

- D: Druckmittel
- H: (voller) Ventilhub; volle Offenstellung

## Patentansprüche

1. Prozessventil, das als Hubventil (1; 1.1; 1.2; 1.3; 1.4) fungiert, mit einem aus wenigstens einem Ventilgehäuseteil (2a; 2.4a, 2.4b) bestehenden Ventilgehäuse (2; 2.1; 2.2; 2.3; 2.4), mit wenigstens einem ersten und einem zweiten Anschlussstutzen (2b, 2c; 2.4c, 2c), die an den Venfilgehäuseteil (2a; 2.4a, 2.4b) angeschlossen sind und eine Verbindung zu dessen Innenraum herstellen, mit einer im Ventilgehäuse (2; 2.1; 2.2; 2.3; 2.4) zwischen den Anschlussstutzen (2b, 2c; 2.4c, 2c) angeordneten Verbindungsöffnung (2d), in oder an der wenigstens eine Sitzfläche (2e) ausgebildet ist, mit wenigstens einem translatorisch verschieblichen Verschlussteil (4; 4.1; 21), der(die) mit der zugeordneten Sitzfläche (2e) zusammenwirkt(zusammenwirken) und die Verbindungsöffnung (2d) steuert(steuern), mit einer an jedem Verschlussteil (4; 4.1; 21) befestigten Betätigungsstange (4a/4b; 21a), die durch eine der Verbindungsöffnung (2d) gegenüberliegende Gehäuseöffnung (2h) des Ventilgehäuses (2; 2.1; 2.2; 2.3; 2.4) aus diesem dichtend herausgeführt und mit einem Antriebskolben (5) eines Stellantriebs (3) verbunden ist(sind), mit einem das Ventilgehäuse (2; 2.1; 2.2; 2.3; 2.4) mit dem Stellantrieb (3) verbindenden Latemengehäuse (3.1), das wenigstens an seinem ventilgehäuseseitigen Ende Mittel (2f, 2g/3.1d, 3.1e) zur Verbindung mit dem Ventilgehäuse (2; 2.1; 2.2; 2.3; 2.4) aufweist,
**dadurch gekennzeichnet,**
**dass** das Laternengehäuse (3.1) an dem Ventilgehäuse (2; 2.1; 2.2; 2.3; 2.4) mit einer Bajonettverbindung (2f, 2g/3.1d, 3.1e) befestigt ist,
**dass** das Latemengehäuse (3.1) an seinem ventilgehäuseseitigen Ende wenigstens zwei, in radialer Richtung gesehen, radial nach innen vorspringende laternenseitige Bajonettkragen (3.1d) aufweist, die jeweils durch zwischen diesen ausgebildete laternenseitige Bajonettausnehmungen (3.1e) beiderseits begrenzt sind, dass das Ventilgehäuse (2; 2.1; 2.2; 2.3; 2.4), außenseits und im Umfangsbereich der Gehäuseöffnung (2h), eine entsprechende Anzahl, in radialer Richtung gesehen, radial nach außen vorspringende ventilgehäuseseitige Bajonettkragen (2f) aufweist, die jeweils durch zwischen diesen ausgebildete ventilgehäuseseitige Bajonettausnehmungen (2g) beiderseits begrenzt sind, wobei die laternenseitigen Bajonettkragen (3.1d) in einer Offenstellung der Bajonettverbindung in die ventilgehäuseseitigen Bajonettausnehmungen (2g) eingreifen und in einer Schließstellung der Bajonettverbindung die ventilgehäuseseitigen Bajonettkragen (2f) nahezu deckungsgleich hintergreifen, dass die Bajonettverbindung (2f, 2g/3.1d, 3.1e) in ihrer Schließstellung formschlüssig selbsttätig verriegelt ist,
**dass** das Laternengehäuse (3.1) in dem auf den Umfang bezogenen Erstreckungsbereich wenigstens eines laternenseitigen Bajonettkragens (3.1 d) einen Schlitz (3.1 g) aufweist, der sich vom ventilgehäuseseitigen Ende des Laternengehäuses (3.1) ein Stück weit axial in diesen und dabei, in radialer Richtung gesehen, durchgängig von innen nach außen erstreckt,
**dass** jeder ventilgehäuseseitige Bajonettkragen (2f) radial außenseits eine in ihrer radialen Tiefe und ihrer Umfangserstreckung begrenzte nutförmige Ausnehmung (2k) aufweist, wobei in der Schließstellung der Bajonettverbindung die Ausnehmung (2k), in Umfangsrichtung gesehen, deckungsgleich mit dem zugeordneten Schlitz (3.1g) positioniert ist,
**dass** eine Lagerduchse (6) norgesehen ist, wobei im Bereich des ventilgehäuseseitigen Endes der Lagerbuchse (6) an dieser wenigstens eine Nase (6d) angeordnet ist, die zum Einen, in radialer Richtung gesehen, über den äußeren Rand der Lagerbuchse (6) auskragt und die zum Anderen, in axialer Richtung gesehen, über die ventilgehäuseseitige Stirnseite der Lagerbuchse (6) hinausreicht, dass die Nase (6d), in radialer Richtung gesehen, federelastisch ausgebildet ist und in den zugeordneten Schlitz (3.1g) eingreift,
und **dass** in der Schließstellung der Bajonettverbindung das Ende der Nase (6d) in die zugeordnete Ausnehmung (2k) eingreift.

2. Vorrichtung nach Anspruch 1,
**dadurch gekennzeichnet,**
**dass** zwei laternenseitige Bajonettkragen (3.1d) vorgesehen sind, die diametral einander gegenüberliegen.

3. Vorrichtung nach Anspruch 1,
**dadurch gekennzeichnet,**
**dass** mehr als zwei laternenseitige Bajonettkragen (3.1d) vorgesehen sind, die gleichmäßig verteilt über den Umfang des rohrförmigen Laternengehäuses (3.1) angeordnet sind.

4. Vorrichtung nach einem der Ansprüche 1 bis 3,
**dadurch gekennzeichnet,**
**dass** die Betätigungsstange (4a/4b; 21a) in der rohrförmigen Lagerbuchse (6) geführt ist, die innerhalb des Laternengehäuses (3.1) angeordnet und festgelegt ist und die dessen axiale Länge weitestgehend ausnutzt.

5. Vorrichtung nach Anspruch 4,
**dadurch gekennzeichnet,**
**dass** die Lagerbuchse (6) wenigstens eine, in radialer Richtung gesehen, durch deren Wandung hindurchgreifende Lagerbuchsenöffnung (6c) aufweist.

6. Vorrichtung nach Anspruch 5,
**dadurch gekennzeichnet,**
**dass** die wenigstens eine Lagerbuchsenöffnung (6c) wenigstens teilweise von der wenigstens einen Laternenöffnung (3.1c) fluiddurchlässig überdeckt ist.

7. Vorrichtung nach einem der Ansprüche 4 bis 6,
**dadurch gekennzeichnet,**
**dass** sich ein ventilgehäuseseitiger Buchsenflansch (6b) der Lagerbuchse (6) auf dem Ventilgehäuse (2; 2.1; 2.2; 2.3; 2.4), das die Gehäuseöffnung (2h) außenseits umschließt, abstützt und dabei eine zwischen der Gehäuseöffnung (2h) und der Betätigungsstange (4a/4b) angeordnete Stangendichtung (10) axial vorspannt.

8. Vorrichtung nach einem der Ansprüche 4 bis 7,
**dadurch gekennzeichnet,**
**dass** in die ventilgehäuseseitige Stirnseite der Lagerbuchse (6) mehrere über den Umfang verteilt angeordnete Nuten eingreifen, die die Lagerbuchse (6) an diesen Stellen durchgängig durchsetzen.

9. Vorrichtung nach einem der vorhergehenden Ansprüche,
**dadurch gekennzeichnet,**
**dass** die jeweilige Ausnehmung (2k), in Umfangsrichtung gesehen, mittig im zugeordneten ventilgehäuseseitigen Bajonettkragen (2f) angeordnet ist.

10. Vorrichtung nach einem der vorhergehenden Ansprüche,
**dadurch gekennzeichnet,**
**dass** die jeweiligen Merkmale auf ein Absperrventil (1.1) Anwendung finden und das Ventilgehäuse (2; 2.1) in Form eines als Absperrventilgehäuse fungierenden ersten Ventilgehäuses (2.1) ausgebildet ist.

11. Vorrichtung nach einem der Ansprüche 1 bis 9,
**dadurch gekennzeichnet,**
**dass** die jeweiligen Merkmale auf ein Tankbodenventil (1.2) Anwendung finden, bei dem der zweite Anschlussstutzen (2c) von unten in einen Tankboden (21) eines Tanks oder Behälters einmündet und das Ventilgehäuse (2; 2.2) in Form eines als Tankbodenventilgehäuse fungierenden zweiten Ventilgehäuses (2.2) ausgebildet ist.

12. Vorrichtung nach einem der Ansprüche 1 bis 9,
**dadurch gekennzeichnet,**
**dass** die jeweiligen Merkmale auf ein Umschaltventil (1.3) Anwendung finden, bei dem das Laternengehäuse (3.1) über ein wenigstens einen vierten Anschlussstutzen (2b**) aufweisendes zweites Ventilgehäuseteil (2a*) mit dem Ventilgehäuseteil (2a) verbunden ist und dadurch das Ventilgehäuse (2; 2.3) in Form eines als Umschaltventilgehäuse fungierenden dritten Ventilgehäuses (2.3) ausgebildet ist, bei dem die beiden Ventilgehäuseteile (2a, 2a*) über eine zweite Verbindungsöffnung (2d*) verbunden sind, in oder an der eine zweite Sitzfläche (2e*) ausgebildet ist, bei dem an der Betätigungsstange (4a/4b) zusätzlich ein zweiter Verschlussteil (4.2) mit einer zweiten Verschlussteildichtung (9*) befestigt ist, der mit der zweiten Sitzfläche (2e*) zusammenwirkt und die zweite Verbindungsöffnung (2d*) steuert, wobei in der Schließstellung des zweiten Verschlussteils (4.2) das ein erstes Verschlussteil (4.1) bildende Verschlussteil (4) und in der Schließstellung des ersten Verschlussteils (4.1) das zweite Verschlussteil (4.2) seine jeweilige Offenstellung einnehmen.

13. Vorrichtung nach einem der Ansprüche 1 bis 9,
**dadurch gekennzeichnet,**
**dass** die jeweiligen Merkmale auf ein Doppelsitzventil (1.4) Anwendung finden, das zwei seriell angeordnete, relativ zueinander bewegbare Verschlussteile (20, 21) aufweist, die in der Schließstellung des Doppelsitzventils (1.4) das Überströmen von Fluiden von einem Ventilgehäuseteil (2.4a; 2.4b) in ein anderes (2.4b; 2.4a) verhindern, die sowohl in der Schließ- als auch in der Offenstellung einen Leckagehohlraum (22) begrenzen, der mit der Umgebung des Doppelsitzventils (1.4) verbunden ist, und das, bezogen auf eine vertikale Anordnung, oben den beiden Verschlussteilen (20, 21) gemeinsamen, deren jeweilige Betätigungsstange (20a, 21a) antreibenden Stellantrieb (3) aufweist.

## Claims

1. Process valve acting as a lift valve (1; 1.1; 1.2; 1.3; 1.4), with a valve housing (2; 2.1; 2.2; 2.3; 2.4) consisting of at least a valve housing part (2a; 2.4a, 2.4b), with at least a first and a second connectors (2b, 2c; 2.4c, 2c), which are connected to the valve housing part (2a; 2.4a, 2.4b) and establish a connection to its internal space, with a connection opening (2d) arranged in the valve housing (2; 2.1; 2.2; 2.3; 2.4) between the connectors (2b, 2c; 2.4c, 2c), in or on which at least a seating surface (2e) is formed with at least a translatably slidable closure part (4; 4.1; 21), which cooperates (cooperate) with the attributed seating surface (2e) and controls (control) the connection opening (2d), with an actuating rod (4a/4b; 21a) fastened on each closure part (4; 4.1; 21), which is (are) guided out of the valve housing (2; 2.1; 2.2; 2.3; 2.4) by a housing opening (2h) of the valve housing (2; 2.1; 2.2; 2.3; 2.4) facing the connection opening (2d) and is (are) connected to an actuating piston (5) of an actuator (3), with a lantern-type housing (3.1) connecting the valve housing (2; 2.1; 2.2; 2.3; 2.4) to the actuator (3), the lantern-type housing (3.1) presenting, at least on its valve housing-sided end, means (2f, 2g/3.1d, 3.1e) for the connection to the valve housing (2; 2.1; 2.2; 2.3; 2.4),
**characterized in that**,
the lantern-type housing (3.1) is fastened to the valve housing (2; 2.1; 2.2; 2.3; 2.4) with a bayonet joint (2f, 2g/3.1d, 3.1e),
the lantern-type housing (3.1) has on its valve housing-sided end at least two, seen in the radial direction, radial inward projecting lantern-sided bayonet collars (3.1d), which are limited in each case on both sides by lantern-sided bayonet recesses (3.1e) formed there between, that the valve housing (2; 2.1; 2.2; 2.3; 2.4), has, externally and in the circumferential area of the housing opening (2h), a corresponding number, seen in the radial direction, of radially outwards projecting valve housing-sided bayonet collars, (2f) which are in each case limited on both sides by valve housing-sided bayonet recesses (2g) formed in between, wherein the lantern-sided bayonet collars (3.1d) engage in an open position of the bayonet joint in the valve housing-sided bayonet recesses (2g) and almost congruently engage in a closed position of the bayonet joint behind the valve housing-sided bayonet collars (2f), and
the bayonet joint (2f, 2g/3.1d, 3.1e) is locked in its closed position positively and self-actuating,
the lantern-type housing (3.1) in the extension area of at least one lantern-sided bayonet collar (3.1 d), related to the circumference, has a groove (3.1 g), which extends from the valve housing-side end of the lantern-housing (3.1) a small extent axially therein and in so doing, viewed in the radial direction, extends throughout from the inside to the outside,
each valve housing-side bayonet collar (2f) has radially on the outside a groove-shaped recess (2k), limited in its radial depth and circumferential extension, wherein in the closed position of the bayonet joint the recess (2k), viewed in the circumferential direction, is positioned congruently with the attributed groove (3.1 g),
a bearing bush (6) is provided, wherein in the area of the valve housing-side end of the bearing bush (6) at least one lug (6d) is arranged thereon, which on the one hand, viewed in the radial direction, projects over the outer edge of the bearing bush (6) and on the other hand, seen in the axial direction, reaches out beyond the valve housing-side front face of the bearing bush (6), that the lug (6d), viewed in the radial direction, is designed in a resilient manner and engages in the attributed groove (3.1g),
and in the closed position of the bayonet joint the end of the lug (6d) engages in the attributed recess (2k).

2. The device according to claim 1,
**characterized in that**,
two lantern-side bayonet collars (3.1d) are provided, which are diametrically opposite each other.

3. The device according to claim 1,
**characterized in that**,
more than two lantern-side bayonet collars (3.1d) are provided, which are arranged uniformly distributed over the circumference of the tubular lantern-housing (3.1).

4. The device according to one of the claims 1 to 3,
**characterized in that**,
the actuating rod (4a/4b; 21a) is guided in the tubular bearing bush (6), which is arranged within the lantern-type housing (3.1) and is fixed and utilizes its axial length to the greatest degree as possible.

5. The device according to claim 4,
**characterized in that**,
the bearing bush (6) has at least one bearing bush opening (6c) reaching through its wall, viewed in the radial direction.

6. The device according to claim 5,
**characterized in that**,
the at least one bearing bush opening (6c) is at least partly covered by the at least one lantern opening (3.1 c) in a fluid passable manner.

7. The device according to one of the claims 4 to 6,
**characterized in that**,
a valve-housing side bushing flange (6b) of the bearing bush (6) is supported by the valve housing (2; 2.1; 2.2; 2.3; 2.4), that externally surrounds the housing opening (2h), and in so doing axially pretensions a rod seal (10) arranged between the housing opening (2h) and the actuating rod (4a/4b).

8. The device according to one of the claims 4 to 7,
**characterized in that**,
a plurality of grooves arranged in a distributed manner over the circumference, which penetrate through the bearing bush (6) in these positions, engage in the valve housing-side front side of the bearing bush (6).

9. The device according to one of the preceding claims,
**characterized in that**,
the respective recess (2k),viewed in the circumferential direction, is arranged centrally in the associated valve housing-side bayonet collar (2f).

10. The device according to one of the preceding claims,
**characterized in that**,
the respective characteristics are used on a stop valve (1.1) and the valve housing (2; 2.1) is designed in the form of a first valve housing (2.1) acting as a stop valve housing.

11. The device according to one of the claims 1 to 9,
**characterized in that**,
the respective characteristics are used on a tank-bottom valve (1.2), in which the second connector (2c) opens up from the bottom into a tank-bottom (21) of a tank or container and the valve housing (2; 2.2) is designed in the form of a second valve housing (2.2) acting as a tank-bottom valve housing.

12. The device according to one of the claims 1 to 9,
**characterized in that**,
the respective characteristics are used on a switching valve (1.3), in which the lantern-type housing (3.1) is connected via a second valve housing (2a*) having at least a fourth connector (2b**) to the valve housing part (2a), and as a result the valve housing (2; 2.3) is designed in the form of a third valve housing (2.3) acting as a switching valve housing, in which both of the valve housing parts (2a, 2a*) are connected via a second connection opening (2d*), in or at which a second seating surface (2e*) is formed, in which on the actuating rod (4a/4b) a second closure part (4.2) is additionally fastened with a second closure part seal (9*), the second closure part cooperating with the second seating surface (2e*) and controlling the second connection opening (2d*), wherein in the closed position of the second closure part (4.2) the closure part (4) forming a first closure part (4.1), and in the closed position of the first closure part (4.1) the second closure part (4.2), take their respective open position.

13. The device according to one of the claims 1 to 9,
**characterized in that**,
the respective characteristics are used on a double seat valve (1.4), which has two serially arranged closure parts (20, 21), movable with respect to each other, which in the closed position of the double seat valve (1.4) prevent the overflow of fluids from one valve housing part (2.4a; 2.4b) into another one (2.4b; 2.4a), which limit a leakage cavity (22) in both the closed as well as the open position (22), the leakage cavity being connected to the surrounding of the double seat valve (1.4), and which, in relation to a vertical arrangement, has on the top the actuator (3) common to both closure parts (20, 21), actuating their respective actuating rod (20a, 21 a).

## Revendications

1. Soupape de traitement qui fonctionne comme soupape de levage (1 ; 1.1 ; 1.2 ; 1.3 ; 1.4) comprenant un boîtier de soupape (2 ; 2.1 ; 2.2 ; 2.3 ; 2.4) composé d'au moins une partie de boîtier de soupape (2a ; 2.4a, 2.4b), comprenant au moins une première et une seconde tubulure de raccord (2b, 2c ; 2.4c, 2c) qui sont raccordées à la partie de boîtier de soupape (2a ; 2.4a, 2.4b) et réalisent une connexion vers son espace interne, comprenant une ouverture de connexion (2d) disposée dans le boîtier de soupape (2 ; 2.1 ; 2.2 ; 2.3 ; 2.4) entre les tubulures de raccord (2b, 2c ; 2.4c, 2c) dans ou sur laquelle au moins une surface d'appui (2e) est réalisée, comprenant au moins une partie de fermeture coulissante par translation (4 ; 4.1 ; 21) qui coopère(nt) avec la surface d'appui associée (2e) et commande(nt) l'ouverture de connexion (2d), comprenant une tige d'actionnement (4a/4b ; 21a) fixée à chaque partie de fermeture (4 ; 4.1 ; 21) qui est/sont sortie(s) de manière étanche du boîtier de soupape (2 ; 2.1 ; 2.2 ; 2.3 ; 2.4) à travers une ouverture de boîtier (2h) de celui-ci opposée à l'ouverture de connexion (2d) et est/sont reliée(s) à un piston d'entraînement (5) d'un mécanisme de commande (3), comprenant un boîtier de lanterne (3.1) reliant le boîtier de soupape (2 ; 2.1 ; 2.2 ; 2.3 ; 2.4) au mécanisme de commande (3) qui présente des moyens (2f, 2g/3.1d, 3.1e) de connexion au boîtier de soupape (2; 2.1 ; 2.2 ; 2.3 ; 2.4) au moins à son extrémité côté boîtier de soupape,
**caractérisée en ce que**
le boîtier de lanterne (3.1) est fixé au boîtier de soupape (2 ; 2.1 ; 2.2 ; 2.3 ; 2.4) avec une connexion à baïonnette (2f, 2g/3.1d, 3.1e),
que le boîtier de lanterne (3.1) présente à son extrémité côté boîtier de soupape au moins deux cols de baïonnette (3.1d) côté lanterne faisant saillie radialement vers l'intérieur, vu dans le sens radial, qui sont limités des deux côtés à chaque fois par des creux de baïonnette (3.1e) côté lanterne réalisés entre eux, que le boîtier de soupape (2 ; 2.1 ; 2.2 ; 2.3 ; 2.4) présente côté externe et dans la région périphérique de l'ouverture de boîtier (2h) un nombre correspondant de cols de baïonnette (2f) côté boîtier de soupape faisant saillie radialement vers l'extérieur, vu dans le sens radial, qui sont limités des deux côtés à chaque fois par des creux de baïonnette (2g) côté boîtier de soupape réalisés entre eux, dans laquelle les cols de baïonnette côté lanterne (3.1d) s'engrènent dans les creux de baïonnette côté boîtier de soupape (2g) dans une position ouverte de la connexion à baïonnette et les cols de baïonnette côté boîtier de soupape (2f) s'engagent presque de manière coïncidente dans une position fermée de la connexion à baïonnette, que la connexion à baïonnette (2f, 2g/3.1d, 3.1e) est verrouillée automatiquement par conjugaison de forme dans sa position fermée, que le boîtier de lanterne (3.1) présente une fente (3.1g) dans la région de prolongement liée à la périphérie d'au moins un col de baïonnette côté lanterne (3.1d) qui s'étend de l'extrémité côté boîtier de soupape du boîtier de lanterne (3.1) sur un bout de largeur axialement dans celui-ci et ce faisant, vu dans le sens radial, de manière continue de l'intérieur vers l'extérieur,
que chaque col de baïonnette côté boîtier de soupape (2f) présente côté externe radialement un creux en forme de rainure (2k) limitée dans sa profondeur radiale et son étendue périphérique, dans laquelle le creux est positionné de manière coïncidente avec la fente associée (3.1g), vu dans le sens périphérique, dans la position fermée de la connexion à baïonnette,
qu'un coussinet (6) est prévu, dans laquelle au moins un bec (6d) est disposé dans la région de l'extrémité côté boîtier de soupape du coussinet (6), lequel projette d'une partie au-dessus du bord extérieur du coussinet (6), vu dans le sens radial, et dépasse d'autre part le côté frontal côté boîtier de soupape du coussinet (6), que le bec (6d) est réalisé de manière élastique, vu dans le sens radial, et s'engrène dans la fente associée (3.1g),
et que l'extrémité du bec (6d) s'engrène dans le creux associé (2k) dans la position fermée de la connexion à baïonnette.

2. Dispositif selon la revendication 1,
**caractérisé en ce que**
deux cols de baïonnette côté lanterne (3.1d) qui sont diamétralement opposés sont prévus.

3. Dispositif selon la revendication 1,
**caractérisé en ce que**
plus de deux cols de baïonnette côté lanterne (3.1d) qui sont disposés de manière répartie régulièrement sur la périphérie du boîtier de lanterne tubulaire (3.1) sont prévus.

4. Dispositif selon l'une quelconque des revendications 1 à 3,
**caractérisé en ce que**
la tige d'actionnement (4a/4b ; 21a) est guidée dans le coussinet tubulaire (6) qui est disposé et fixé au sein du boîtier de lanterne (3.1) et qui exploite très largement sa longueur axiale.

5. Dispositif selon la revendication 4,
**caractérisé en ce que**
le coussinet (6) présente au moins une ouverture de coussinet (6c) traversant sa paroi, vu dans le sens radial.

6. Dispositif selon la revendication 5,
**caractérisé en ce que**
l'au moins une ouverture de coussinet (6c) est au moins partiellement recouverte par l'au moins une ouverture de lanterne (3.1c) de manière perméable aux fluides.

7. Dispositif selon l'une quelconque des revendications 4 à 6,
**caractérisé en ce qu'**
une bride à douilles côté boîtier de soupape (6b) du coussinet (6) s'appuie sur le boîtier de soupape (2 ; 2.1 ; 2.2 ; 2.3 ; 2.4) qui entoure du côté externe l'ouverture de boîtier (2h) et précontraint ce faisant axialement un joint de tige (10) disposé entre l'ouverture de boîtier (2h) et la tige d'actionnement (4a/4b).

8. Dispositif selon l'une quelconque des revendications 4 à 7,
**caractérisé en ce que**
plusieurs rainures disposées de manière répartie sur la périphérie s'engrènent dans le côté frontal côté boîtier de soupape du coussinet (6), lesquelles traversent de manière continue le coussinet (6) à ces endroits.

9. Dispositif selon l'une quelconque des revendications précédentes,
**caractérisé en ce que**
le creux respectif (2k) est disposé de manière centrale dans le col de baïonnette côté boîtier de soupape associé (2f), vu dans le sens périphérique.

10. Dispositif selon l'une quelconque des revendications précédentes,
**caractérisé en ce que**
les caractéristiques respectives s'appliquent à une soupape d'arrêt (1.1) et le boîtier de soupape (2 ; 2.1) est réalisé sous la forme d'un premier boîtier de soupape (2.1) fonctionnant comme boîtier de soupape d'arrêt.

11. Dispositif selon l'une quelconque des revendications 1 à 9,
**caractérisé en ce que**
les caractéristiques respectives s'appliquent à une soupape de fond de réservoir (1.2) dans laquelle la seconde tubulure de raccord (2c) débouche du dessous dans un fond de réservoir (21) d'un réservoir ou récipient et le boîtier de soupape (2 ; 2.2) est réalisé sous la forme d'un second boîtier de soupape (2.2) fonctionnant comme boîtier de soupape de fond de réservoir.

12. Dispositif selon l'une quelconque des revendications 1 à 9,
**caractérisé en ce que**
les caractéristiques respectives s'appliquent à une soupape d'inversion (1.3), dans laquelle le boîtier de lanterne (3.1) est relié par le biais d'au moins une seconde partie de boîtier de soupape (2a*) présentant une quatrième tubulure de raccord (2b**) à la partie de boîtier de soupape (2a) et le boîtier de soupape (2 ; 2.3) est de ce fait réalisé sous la forme d'un troisième boîtier de soupape (2.3) fonctionnant comme boîtier de soupape d'inversion, dans lequel les deux parties de boîtier de soupape (2a, 2a*) sont reliées par le biais d'une seconde ouverture de connexion (2d*) dans ou sur laquelle une seconde surface d'appui (2e*) est réalisée, dans laquelle une seconde partie de fermeture (4.2) est en outre fixée à la tige d'actionnement (4a/4b) avec un second joint de partie de fermeture (9*) qui coopère avec la seconde surface d'appui (2e*) et commande la seconde ouverture de connexion (2d*), dans lequel la partie de fermeture (4) formant une première partie de fermeture (4.1) adopte sa position ouverte respective dans la position fermée de la seconde partie de fermeture (4.2) et la seconde partie de fermeture (4.2) adopte sa position ouverte respective dans la position fermée de la première partie de fermeture (4.1).

13. Dispositif selon l'une quelconque des revendications 1 à 9,
**caractérisé en ce que**
les caractéristiques respectives s'appliquent à une soupape à double siège (1.4) qui présente deux parties de fermeture (20, 21) disposées en série, mobiles l'une par rapport à l'autre qui empêchent le débordement de fluides d'une partie de boîtier de soupape (2.4a; 2.4b) dans une autre (2.4b; 2.4a) dans la position fermée de la soupape à double siège (1.4), lesquelles limitent une cavité de fuite (22) aussi bien dans la position fermée que dans la position ouverte qui est relié aux abords de la soupape à double siège (1.4) et présente le mécanisme de commande (3) commun aux deux parties de fermeture (20, 21) sur le dessus, par rapport à un agencement vertical, entraînant leur tige d'actionnement respective (20a, 21 a).
